(19)

Europäisches
Patentamt
European
Patent Office
Office européen
des brevets

(11)  **EP 3 664 319 A1**

(12)  **EUROPEAN PATENT APPLICATION**

(43) Date of publication:
**10.06.2020  Bulletin 2020/24**

(51) Int Cl.:
***H04B 10/40*** *(2013.01)*

(21) Application number: **18306650.5**

(22) Date of filing: **07.12.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **Mitsubishi Electric Corporation
Tokyo 100-8310 (JP)**
Designated Contracting States:
**AL AT BE BG CH CY CZ DE DK EE ES FI GB GR
HR HU IE IS IT LI LT LU LV MC MK MT NL NO PL
PT RO RS SE SI SK SM TR**

(72) Inventor: **FROC, Gwillerm
35708 RENNES Cedex 7 (FR)**

(74) Representative: **Plasseraud IP
66, rue de la Chaussée d'Antin
75440 Paris Cedex 09 (FR)**

(54)  **METHOD FOR RECEIVING DATA IN AN OPTICAL NETWORK NODE AND APPARATUS FOR
IMPLEMENTING THE SAME**

(57)      A method for receiving data in an optical transceiver of an optical distribution network is proposed. The method comprises: receiving, at a receiving side of the optical transceiver, a received optical signal, wherein the received optical signal corresponds to a first transmit optical signal carrying the data transmitted by an optical source on a first transmission link that includes an optical fiber, determining an interference component of an interference signal in the received optical signal, wherein the interference component is induced by a transmission by a transmitting side of the optical transceiver of a second transmit optical signal on a second transmission link that includes the optical fiber, and processing the received optical signal, based on the determined interference component, to obtain an estimate of the first transmit optical signal.

FIG. 9

**Description**

The present disclosure relates to the field of optical networks, in particular optical access networks using optical fibers for data communications.

Optical networks using optical fibers have long used network topologies such as point-to-point topologies (IEEE series), passive optical networks (e.g. G.987, G988 series), including Time and Wavelength Division Multiplexed (TWDM) Passive Optical Network (PON) (G.989 series) and Versatile Wavelength Division Multiplexed WDM-PON (G.989 series). Optical point-to-point data transmission typically uses one wavelength on two optical fibers, each fiber being dedicated to transmission in one direction. Passive Optical Networks e.g. G.987, G988 series, also use one wavelength on one fiber, the power of which is split into several fibers to reach different end users. There is typically one wavelength in downstream and one different wavelength in upstream on the same Optical Distribution Network (ODN). The wavelength on the upstream and the wavelength on the downstream are sufficiently far the one from the other to offer isolation properties at low complexity and cost between the signals carried by the two wavelength. PON systems may provide up to 10 Gigabit per second (Gbps), using NRZ modulation. TWDM PON (G.989 series) systems use several wavelength pairs stacked one with the others on the same ODN. As defined by the ITU, a TWDM PON system is a multiple wavelength PON system in which each wavelength channel may be shared among multiple ONUs by employing time division multiplexing and multiple access mechanisms. TWDM PON systems can provide up to 4 channels at 10Gbps line rate, based on NRZ modulation. In Point-to-Point (PtP) WDM PON (G.989 series) systems, different PON systems (that may correspond to different sets of end users) are multiplexed and demultiplexed on the same ODN using wavelength multiplexing/demultiplexing (potentially through the use of additional power splitters). As defined by the ITU, a PtP WDM PON system is a multiple wavelength PON system that enables point-to-point connectivity using a dedicated wavelength channel per ONU for the downstream direction and a dedicated wavelength channel per ONU for the upstream direction. The wavelengths that link the Optical Termination and the Optical Network Unit (end users) can be chosen while operating the system in a tunable way, that is, tuned to a target transmission wavelength. Such wavelength versatile WDM-PON systems may provide up to 10 Gbps per line rate, using NRZ modulation.

In 2017, new optical transceivers, often referred to as "BiDi" transceiver, have emerged on the market, with the capability of bidirectional transmission of data on a single fiber, at a maximum transmission rate of approximately 10 Gbps.

Optical access topologies have been targeting front-haul applications since 2015-2017, for example to link Mobile Base Band Units (BBU) and Remote Radio Heads (RRH), which are also referred to as BU (Baseband unit) and DU (Decentralized Unit) in 3GPP (3rd Generation Partnership Project) wording. In addition, telecommunication operators have expressed several requirements with respect to front-haul optical access, including the following: for Point-to-Point communication, the upstream and downstream communication links, that is, the communication link in each direction, should be provided on a unique optical fiber, contrary to the IEEE legacy point-to-point technology. Among other advantages, this would reduce by half the number of fibers, which also significantly reduces the size of the housing and the maintenance effort.

There is therefore a requirement to limit the number of optical fibers used for data communication among a plurality of users in optical access networks, leading to consider schemes and corresponding optical components where multiple users are multiplexed on a single optical fiber.

Additional cost constraints also need to be accounted for, as it is desirable to reuse low-cost components, e.g. transceivers and multiplexer/demultiplexer devices, that have been developed for optical network technologies, such as CWDM (Coarse Wavelength Division Multiplexing) or DWDM (Dense Wavelength Division Multiplexing), in which data communication signals in both directions are multiplexed for multiple users on a single optical fiber. Reusing, at least in part, such legacy technologies, which were developed for and have been deployed in optical networks other than optical distribution networks, raises several technical challenges, in particular in view of the use of adjacent wavelengths of the upstream and downstream optical signals for each user, when used in optical access networks. Those challenges become even more salient, and other challenges appear when considering optical access networks using BiDi transceivers and operating at line rates beyond 10 Gbps.

There is therefore a need for providing an improved scheme for operating an optical network node, such as an optical transceiver, and network node implementing the same that addresses the above-described drawbacks and shortcomings of the conventional technology in the art.

It is an object of the present subject disclosure to provide an improved scheme for operating an optical network node, and network node implementing the same.

Another object of the present subject disclosure is to provide an improved scheme for operating an optical transceiver of an optical distribution network, and an optical transceiver implementing the same.

Yet another object of the present subject disclosure is to provide an improved scheme for receiving data in an optical transceiver, and an optical transceiver implementing the same.

To achieve these objects and other advantages and in accordance with the purpose of the present subject disclosure, as embodied and broadly described herein, in one aspect of the present subject disclosure, a method for receiving data in an optical transceiver of an optical distribution network is proposed, which comprises: receiving, at a receiving side of the optical transceiver, a received optical signal, wherein the received optical signal corresponds to a first transmit optical signal carrying the data transmitted by an optical source on a first transmission link that includes an optical fiber; determining an interference component of an interference signal in the received optical signal, wherein the interference component is induced by a transmission by a transmitting side of the optical transceiver of a second transmit optical signal on a second transmission link that includes the optical fiber; and processing the received optical signal, based on the determined interference component, to obtain an estimate of the first transmit optical signal.

In some embodiments, the received optical signal and the second transmit optical signal respectively correspond to a downstream channel and an upstream channel of a bidirectional optical signal in a plurality of bidirectional optical signals transmitted on the optical fiber using frequency multiplexing.

In some embodiments, the first transmit optical signal and the second transmit optical signal have adjacent carrier frequencies, wherein the receiving the received optical signal comprises: filtering a received signal to separate the bidirectional optical signal from other signals of the plurality of bidirectional optical signals.

In some embodiments, the proposed method may further comprise: determining an amplitude distortion component of the interference component, and removing the amplitude distortion component from the received optical signal.

In some embodiments, the proposed method may further comprise: determining a phase distortion component of the interference component, and removing the phase distortion component from the received optical signal.

Therefore, the proposed compensation scheme may advantageously be designed so that only an amplitude distortion component is compensated for, or both an amplitude distortion component and a phase distortion component are compensated for.

In some embodiments, the determining the interference component comprises characterizing a combination of contribution signals induced from respective backward propagations of the transmitted second transmit optical signal.

In some embodiments, at least one contribution signal is generated by a backward reflection of the transmitted second transmit optical signal on a network node comprised in the second transmission link, such as an optical connector or a power splitter of the optical distribution network.

In one or more embodiments, the determining the interference component comprises: stopping all transmissions of light sources of the optical distribution network except for the transmitting side of the optical transceiver; once none of the light sources other than the optical transceiver are transmitting, transmitting, at the transmitting side of the optical transceiver, of a predetermined signal; recording, at the receiving side of the optical transceiver, of a received signal corresponding to the transmission of the predetermined signal.

In some embodiments, the determining of the interference component comprises: determining an estimate of a first attenuation coefficient of a first signal component of the received optical signal that corresponds to the transmitted first transmit optical signal.

In some embodiments, the processing of the received optical signal comprises: determining an estimate of a second attenuation coefficient of a second signal component of the received optical signal that corresponds to the transmitted second transmit optical signal.

In some embodiments, the determining of the interference component comprises: determining an estimate of a phase shift coefficient, based on a first carrier frequency of the first transmit optical signal and a second carrier frequency of the second transmit optical signal.

In another aspect of the present subject disclosure, an apparatus is proposed, which comprises a processor, a memory operatively coupled to the processor, and network interfaces to communicate in an optical distribution network, wherein the apparatus is configured to perform a method as proposed in the present subject disclosure. An optical transceiver of an optical distribution network comprising such an apparatus is also proposed.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed. In another aspect of the present subject disclosure, a data set representing, for example through compression or encoding, a computer program as proposed herein, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

## Brief description of the drawings

The present subject disclosure will be better understood and its numerous objects and advantages will become more apparent to those skilled in the art by reference to the following drawings, in conjunction with the accompanying specification, in which:

Figures 1a and 1b respectively show an example of point-to-point topology network, and an example of PON topology network;

Figure 2 illustrates a bidirectional topology using wavelength division multiplexing, in accordance with one or more embodiments;

Figure 3 is a block diagram illustrating an exemplary optical transceiver, in accordance with one or more embodiments;

Figure 4 is a block diagram illustrating an exemplary data reception procedure, in accordance with one or more embodiments;

Figure 5 illustrates an exemplary optical network, in accordance with one or more embodiments;

Figure 6 illustrates an exemplary backward channel knowledge acquisition procedure according to one or more embodiments;

Figure 7 illustrates an exemplary detuning measurement procedure according to one or more embodiments;

Figure 8 illustrates an exemplary backward channel interference compensation according to one or more embodiments;

Figure 9 illustrates an exemplary transceiver according to one or more embodiments.

## Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the following description and claims, the terms "coupled" and "connected", along with their derivatives, may be indifferently used to indicate that two or more elements are in direct physical or electrical contact with each other, or two or more elements are not in direct contact with each other, but yet still co-operate or interact with each other.

For the purposes of this disclosure a "optical network" should be understood to refer to a network that may couple devices (also referred to herein as "nodes"), including using optical fibers, so that optical data communications may occur between devices. Any number of nodes, devices, apparatuses, links, interconnections, etc. may be used in an optical network according to the present subject disclosure.

A computing device of an optical network, for example a receiver, a transmitter (e.g. an optical/electrical compound device comprising a laser source device), or a transceiver, may be capable of sending and/or receiving signals, such as via one or more optical fibers, and/or may be capable of processing and/or storing data.

It should be understood that embodiments of the present subject disclosure may be used in a variety of applications, in particular, although not limited to, optical distribution networks.

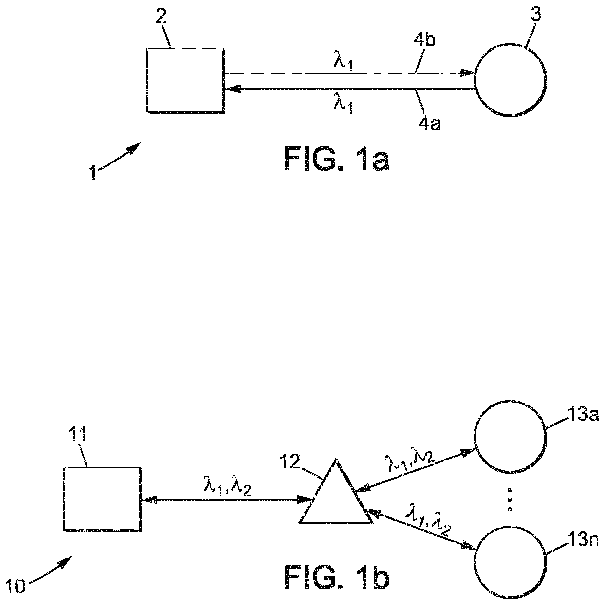

Figure 1a schematically illustrates an exemplary point-to-point topology that would typically be used for conventional optical access.

Fig. 1a shows a network (1) in which two optical network nodes (2,3) are connected with each other for data communications by two fibers (4a,4b).

The point-to-point topology uses for optical communications one wavelength ($\lambda_1$) on an optical fiber in one communication link direction, and a same wavelength ($\lambda_1$) on another fiber for the other direction. Said otherwise, the same wavelength is used for transmission of optical signals on two different fibers (4a,4b) respectively dedicated to data transmission in one and the reverse directions. Throughout the present subject disclosure, the opposite directions as viewed from a network node, one direction corresponding to data transmitted by the network node, and the opposite direction corresponding to data received by the network node, will be indifferently referred to as "upstream" and "downstream", "uplink" and "downlink", respectively. Data transmitted over one of the fibers (4a,4b) would typically experience an attenuation in the order of 0.5 dB/km, depending on the type of fiber used (in fiber optical networking, the attenuation can typically be in the order of 0.15dB per km at an operating wavelength around 1550nm, and 0.55db/km at an operating wavelength around 1300nm.). For example, assuming an optical fiber length of approximately 40 km, the attenuation from the data source (2,3) to the well (3,2) would be approximately 4.5 dB. Such point-to-point topology may provide line rates of up to 25Gbps, based on NRZ modulation, in the C band at around 1550nm wavelength.

Fig. 1b schematically illustrates an exemplary PON topology that would also typically be used for conventional optical access.

Fig. 1b shows a network (10) in which a central node (11) is connected to a plurality of network nodes (13a...13n) through a power splitter node (12), each pair of two nodes being connected by a single optical fiber using two wavelengths ($\lambda_1$ and $\lambda_2$), one for each communication direction.

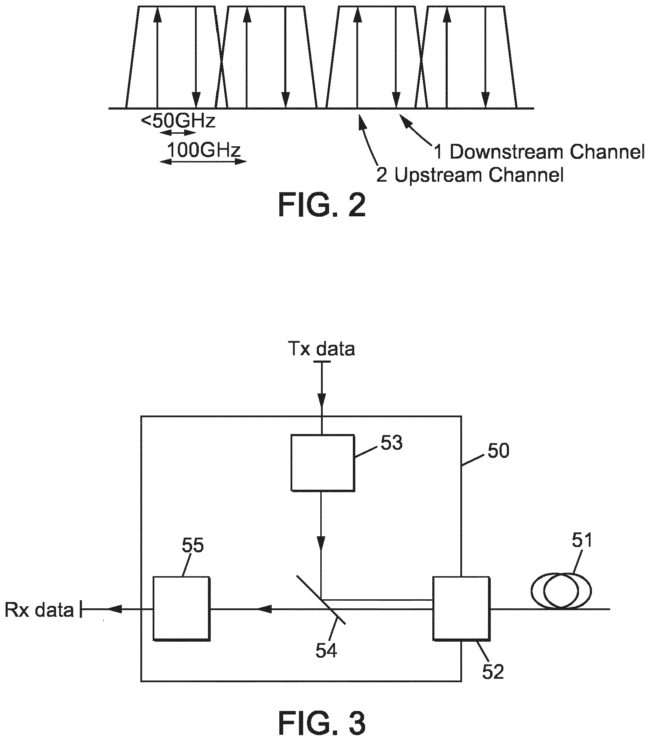

Figure 2 illustrates an exemplary Bi-Directional topology, in which a plurality of downstream channel / upstream channel pairs is transported over a single optical fiber.

In contrast to the point-to-point topology illustrated on Fig. 1a in which an upstream channel is transported over a first optical fiber and a downstream channel is transported over a second optical channel, the upstream channel and the downstream channel using the same wavelength, the Bi-Directional topology uses a frequency multiplex to transport on a same optical fiber an upstream channel and a downstream channel: the upstream channel and the downstream channel use adjacent frequency resources, that is, adjacent wavelengths. This frequency multiplex may be used for transporting several pairs of upstream and downstream channels, in which each pair may correspond to a user.

Indeed, in order to optimize resource consumption in point-to-point topology optical networks, whether using a single optical fiber or two fibers (one for each direction), it is beneficial to multiplex as many users as possible on the same optical fiber resources. Specifically, in optical access networks, efficiency of resource use is a key requirement, so as to address as many users as possible using limited resources. When using only one fiber, different users may be multiplexed through the use of a different pair of wavelengths (one wavelength for the downstream channel, and one wavelength for the upstream channel) for each user.

Another requirement, in particular for optical access networks, is to use components whose design and manufacturing is simple enough so that their cost is limited and allows meeting severe cost constraints. Existing components, such as transceivers, may typically be reused for that matter. Those transceivers will have been developed for CWDM or DWDM technologies in which each user is allocated a pair of adjacent wavelengths that fit into a filtering width for user de-multiplexing, so that the discriminating between users may be performed at a low-cost transceiver component using an optical bandpass filter.

For example, shown in Fig. 2 are four pairs of upstream channel and downstream channel. The pairs are frequency multiplexed using wavelength division multiplexing (WDM) such that the respective center wavelengths of upstream channels of adjacent pairs are separated by approximately 100 GHz. For each pair, the center wavelength used by the upstream channel of the pair is separated by less than 50 GHz from the center wavelength used by the downstream channel of the pair. This corresponds to channel spacing values specified for DWDM (Dense Wavelength Division Multiplexing) systems, which allow transmitting simultaneously more information than CWDM (Coarse Wavelength Division Multiplexing) systems and are typically used for optical data communications in core network sub-systems of wireless cellular network systems, such as 3GPP networks (e.g. GSM, UMTS, HSPA, LTE, LTE-A, etc.).

Fig. 2 also shows that a same filtering template (for example in a separator (diplexer device) which may be based on filtering technologies), in which each pair of upstream and downstream wavelengths can fit, may be used for distinguishing optical signals associated with users from one another. The use, for each user, of adjacent wavelengths that fit into the same filter template advantageously allows using user multiplexing/demultiplexing components that are based on filters, where the same optical filter is used for processing both the upstream channel and the downstream channel associated with a user. In a BiDi transceiver, this filtering operation may be performed through a separator (diplexer) adapted for isolating one direction from the other. Various technical problems may be raised by the use of such a separator component in a BiDi transceiver: first the isolation achieved by the separator is never perfect, and the lower the cost of the separator component, the less performing the isolation. In addition, the wavelength position may vary in versatile systems, which results in the wavelength no longer being in a central position of the filter.

However, the use of a same filter for processing both the upstream channel and the downstream channel associated with each user in the optical distribution network also imposes using adjacent wavelengths for the upstream channel and the downstream channel of each user, which creates several challenges, mostly due to the lack of isolation within the filtering template between the wavelength of the upstream channel and the wavelength of the downstream channel.

Technical issues that are encountered when considering using a bi-directional optical transceiver with adjacent wavelength optical transmission technology at a line rate in the order of 10 Gbps include issues related to the upstream and downstream filtering.

The filtering at a line rate of 10 Gbps can be based on components such as, for example, circulators and thin-film filters. Because filtering is not perfect, the isolation between the two propagating beams (upstream channel and downstream channel) for each channel pair is also not perfect, that is, part of the transmitted signal (downstream channel) is mixed with the received signal (upstream channel). This results in the transmitted signal being superimposed on the expected received signal at the receiver, which induces external light injection and induces perturbation in the gain characteristics (both in the time and the frequency domain) at the transmitter level.

In addition, both ends of the point-to-point link may not be perfectly tuned, in particular if there is a cost reduction requirement for the BiDi transceiver which is addressed through reduction of the performance of the tuning system, and/or reduction of the performance of the separator/diplexer.

Technical issues to be addressed also include issues related to the following phenomenon that spread the spectrum of the signal, which makes the filtering even more critical: The modulation used for transmitting data may spread the optical signal in the frequency domain as the bit rate is increased while keeping the same modulation format. In addition, propagation dispersion along the transmission link (that includes the optical fiber) also spreads the optical signal in the frequency domain. Moreover, diffusion and back reflections over propagation induces additional signal interference.

BiDi Systems that have been demonstrated so far usually operate at 10Gbps. However, some operators have expressed a need for bi-di systems capable of providing transmissions at line rates beyond 10 Gbps, for example at 25 Gbps and even at 50 Gbps. This is the case for instance for the eCPRI specification released in August 2017 which describes scenarios of interest for operators wherein transmissions at 50 Gbps are being considered. Therefore, BiDirectional DWDM transceivers operating at rates beyond 10Gbps are required.

Besides the challenges described above in relation to a line rate in the order of 10 Gbps, several additional issues/challenges have to be addressed for rates beyond 10 Gbps:

First, the costs associated with the components used in the filtering assembly should preferably be controlled, thereby creating a significant cost constraint. Preferably, the low cost of upstream and downstream isolation achievable for the BiDi technology operating at 10 Gbps should be maintained. Keeping the same filtering assembly or a cost-wise equivalent as the one used for rates up to 10 Gbps may provide a solution to this constraint.

For example, as discussed above, transceiver devices designed for DWDM technology for use in core networks of cellular networks operating at a line rate of approximately 10 Gbps with NRZ modulation should ideally be reused in the context of optical access networks such as ODN networks, in order to avoid the expenses associated with designing and manufacturing, or else sourcing, devices with better filtering performances.

Other challenges are linked with the available options for increasing the line rate beyond 10 Gbps:
First, an increase in the line rates using the same modulation format will result in the related baseband spectrum range also increasing (substantially linearly). In this regard, it is worth noting that a transmission rate of 10 Gbps using NRZ modulation already requires a 20GHz bandwidth.

In addition, a modulation which is more spectrally efficient than NRZ might be considered for transmission rates beyond 10 Gbps. For example, the M-PAM modulation, which bandwidth is about half the NRZ bandwidth for the same bit rate, might be considered. However the sensitivity is altered by about 4 dB as compared to NRZ at the same bit rate each time M doubles (e.g. 4dB sensitivity difference between NRZ and 4PAM).

Irrespective of the modulation scheme (NRZ or M-PAM), keeping the filtering scheme as it is, the performance of the filtering of the upstream from the downstream would have to be significantly increased, which is highly costly. When using NRZ, the top of the filter has to be enlarged while keeping the effective band where there are in the spectrum i.e. the slopes have also to be increased. When using 4PAM, the isolation has to be increased which also mean higher slopes. Indeed, 4PAM modulation may be used to achieve higher bitrates in view of its substantially constant spectral support in the frequency domain, to the extent that the noise level can be reduced. This noise reduction is in practice achieved with higher slope filters, that are capable to filter out noise located on the frequency axis at the aisles of the channels.

Fig. 3 illustrates an example of BiDi transceiver device (50) which receives an optical signal S transmitted over an optic fiber (51) connected to an interface of the device, for example a coupler device (52). The coupler device (52) may be a WDM coupler, that is, a coupler capable of combining and separating data transmitted over the fiber (51) based on the light wavelengths used for the upstream and downstream.

The device (50) comprises an optical transmitter (53) configured for transmitting a signal T over the optic fiber (51), based on transmission data (Tx data) to be transmitted to one or more distant nodes. Transmission data is processed by the optical transmitter (53) to generate the optical signal T which is provided to the fiber (51) through a diplexer (54) and the coupler (52).

The device (50) further comprises an optical receiver (55), for example a photo-receiver, including for example a photodiode, a trans-impedance amplifier assembly, an analogue circuit and analogue to digital converter, and a digital processor, configured for receiving the optical signals transmitted from one or more distant nodes over the optic fiber (51), and received through the coupler (52) and the diplexer (54). The received optical signal is processed by the optical receiver (55) to generate reception data (Rx data).

The signal S transmitted from a distant source may be represented by the following phase-amplitude complex representation: $S = \tilde{s}e^{i\omega_s t}$, where $i$ denotes the complex number whose square is equal to -1, $\omega_s$ denotes the pulsation of the signal S, $t$ denotes the time, and $\bar{s}$ denotes the amplitude of the signal.

The signal T transmitted by the device (50) may likewise be represented by the following phase-amplitude complex representation: $= \tilde{t}e^{i\omega_t t}$, where $i$ denotes the complex number whose square is equal to -1, $\omega_t$ denotes the pulsation of the signal T, $t$ denotes the time, and $\bar{t}$ denotes the amplitude of the signal.

The optical receiver (55) of the device (50) may receive a combination of a first received signal $s_r$ corresponding to the signal S transmitted from a distant source, and a second received signal $t_b$ (also referred to in the following as an interference signal), at least one component of which corresponds to an aggregate of backward propagations of the signal T transmitted by the device (50) itself. Those backward propagations result from imperfections in the optical fiber (51) in which a signal is transmitted by the device (50) as well as from reflections in each connector, coupler, or more generally each optical device (52), besides the optical fiber (51), which the signal T transmitted by the device (50) encounters on its signal path.

These backward propagations hinder the discriminating between the transmitted signal and the received signal at a transceiver, in particular when such transceiver is connected to a fiber which is several kilometers long. As explained above, optical signals transmitted over a 40 km long fiber may experience an attenuation of approximately 0,15 dB per kilometer, that is, 6 dB for a 40 km-long fiber. Signal attenuation also comes from the connectors, and possibly any other component on the signal path, such as, for example, power splitter components, in which case such losses are referred to as "insertion losses," so that the attenuation experienced by the received signal at the transceiver may be as high as 18 dB. On the transmitter side, the signal power of the transmitted signal will be much higher (e.g. 15dB, 18dB, or possibly 20 dB) than the one of the received signal. Even though backward reflections may also be strongly attenuated (in the order to 20dB or 30dB) by the diplexer, the signal power of at least those of the reflections that are generated by optical devices located close to the transmitter of the transmitted signal, such as the coupler (52) which is in the case of the transceiver (50) shown on Fig. 3 close to the transmitter (53), may be of an order of magnitude that approaches the order of magnitude of the signal received at the transmitter inducing significant interference with the signal S. This creates a significant interference for this received signal, which degrades the performances, expressed in a bit error rate value, of the transceiver, and may even make it difficult to discriminate the received signal from components of the transmitted signal generated from backward reflections thereof.

The first received signal $s_r$ may be represented as the signal received at the receiver (55) from a signal S transmitted over a propagation channel that includes propagation in the optical fiber (51) connected to the device (50), which channel may be referred to in the following as the "forward channel."

The second received signal $t_b$ may be represented as the signal received at the receiver (55) as a result of the backward propagations of a signal T transmitted by the device (50) which may be represented by a backward propagation channel, which channel may indifferently be referred to in the following as the "backward channel," or the "counter-propagating channel." Said otherwise, the interference component (of the interference signal) generated by backward propagations of the signal T transmitted by the transceiver (50) on a transmission link that includes the optical fiber (51) connected to the transceiver (50) may be expressed as a convolution of the signal T with a complex transfer function $H_{cp}$ representing the backward channel.

Assuming a forward channel complex impulse response function $H_p = \alpha e^{i\theta}$, a frequency-domain representation of the first received signal may be expressed as follows:

$$s_r = H_p * S = \tilde{s}\alpha e^{i(\theta + \omega_r t)} \qquad [\text{Eq. 1}]$$

Assuming a backward channel complex impulse response function $H_{cp} = ae^{i\varphi}$, a frequency-domain representation of the second received signal may be expressed as follows:

$$t_b = H_{cp} * T = \tilde{t}ae^{i(\varphi + \omega_t t)} \qquad [\text{Eq. 2}]$$

In the example illustrated on Fig. 3, S corresponds to the signal transmitted by a source distant from the transceiver (50) on the fiber (51), and T corresponds to the signal transmitted by the transmitter (53) of the transceiver (50) on the fiber (51). $H_p$ and $H_{cp}$ are the propagating and counter-propagating channels associated with S and T, respectively.

Signal components $\tilde{s}$ and $\tilde{t}$ may be viewed as amplitude attenuation components, and $\theta$ and $\varphi$ may be viewed as phase shift components, some or all of which are to be estimated and compensated for according to embodiments of the present subject disclosure. Although such is not represented in Equations 1 and 2, the person having ordinary skill in the art will understand that signal components $\tilde{s}$ and $\tilde{t}$ are time-varying components (as they typically vary with a time constant of the order of magnitude of the symbol time duration). Likewise, $\alpha$ and $a$ are time-varying components (as they typically vary with a time constant of the order of magnitude of that of the channel).

More specifically, in Equation 1, the terms $\theta + \omega_t t$ correspond to the optical carrier. In embodiments, $\omega_r$ may represent a wavelength that corresponds to a frequency in the order of $10^{14}$ Hz.

In one or more embodiments, interferences to be processed include interference corresponding to a varying difference between the two carrier frequencies $\omega_r$ and $\omega_t$. Equations 1 and 2 are a convenient way to identify and estimate such varying difference, as can be seen below in Equation 4 derived therefrom.

The time constants of time variations of time varying components $\tilde{s}$ and $\tilde{t}$, and $\alpha$ and $a$, may be considered to be significantly smaller than the time constant associated with the optical carriers, and as a consequence smaller than the time constant of the interference generated by the varying difference between the two carrier frequencies $\omega_r$ and $\omega_t$. As a consequence, in some embodiments, the time variations of time varying components $\tilde{s}$ and $\tilde{t}$, and $\alpha$ and $a$ may be ignored in view of their time constant as compared to that of the interference generated by the varying difference between the two carrier frequencies $\omega_r$ and $\omega_t$.

The receiver (55) (e.g. photodiode receiver) of the transceiver (50) receives the first received signal $s_r$ and the second received signal $t_b$ as superposed. In embodiments where the receiver (55) is a photodiode receiver, the current $i$ output from the photodiode may be estimated as being proportional to the received light intensity, and may be expressed as follows:

$$i = M \cdot (s_r + t_b) \cdot \overline{(s_r + t_b)} \qquad [\text{Eq. 3}]$$

where M is a known parameter linked to the used equipment. Equation 3 can also be expressed as:

$$\frac{i}{M} = s_r \cdot s_r^* + s_r \cdot \overline{t_b} + t_b \cdot \overline{s_r} + t_b \cdot t_b^* \qquad [\text{Eq. 4}]$$

where $z^*$ and $\overline{z}$ are indifferently used to designate the complex conjugate of a complex number $z$.

Combining Equations 1, 2, and 4 leads to the following Equation 5:

$$\tilde{s}^2 + \frac{2a}{\alpha} \cdot \tilde{s}\tilde{t} \cdot cos(\varphi - \theta + (\omega_t - \omega_r)t) + \frac{a^2\tilde{t}^2}{\alpha^2} - \frac{i}{M\cdot\alpha^2} = 0 \qquad [\text{Eq. 5}]$$

where the current $i$ is measured, $M$ is a known parameter linked to the used equipment, $\tilde{t}$ is a known component of the transmitted signal (as well as, possibly, the phase component $\varphi$), and $\alpha$ and $a$ are determined by the propagation and counter-propagation channels, respectively. As indicated above, the interference generated by the varying difference between $\omega_r$ and $\omega_t$ appears explicitly in Equation 4. Equation 4 also indicates that an estimate of this varying difference can be obtained through filtering. Indeed, even though $\tilde{s}$ and $\tilde{t}$ are also time varying components, they vary with a time constant which is significantly smaller than that of $\tilde{\omega}_r$ and $\omega_t$, as well as that of the difference between $\omega_r$ and $\omega_t$.

In Equation 5, $\tilde{s}$ corresponds to the signal to be estimated, possibly as well as $\theta$ in the general case. In some embodiments, it may be assumed that the $\theta$ parameter does not carry any information to be determined at the receiver side (e.g. in cases where the transmitting side does not encode any information in the phase of the transmitted signal). It may then be considered in some embodiments that $\tilde{s}$ is the only unknown signal that the receiver side may need to retrieve.

Under this assumption Equation 5 above can be viewed as a quadratic equation of the $a \cdot x^2 + b \cdot x + c = 0$ type with $x$ being the unknown variable, with the following parameters:

$$a = 1, \quad b = \frac{2a}{\alpha} \cdot \tilde{t} \cdot cos(\varphi - \theta + (\omega_t - \omega_r)t), \quad c = \frac{a^2\tilde{t}^2}{\alpha^2} - \frac{i}{M\cdot\alpha^2},$$

and $\tilde{s}$ being the unknown variable.

The discriminant $\Delta = b^2 - 4ac$ for the above quadratic equation can be considered positive or zero, as $i$ corresponds to a sum of all contributions, so that $\dfrac{i}{M} \geq a^2\tilde{t}^2$. It follows that Equation 5 always has at least one real solution, which may be expressed as shown by Equation 6:

$$\tilde{s} = \frac{1}{2}\left\{ -\frac{2a}{\alpha} \cdot \tilde{t} \cdot cos(\Phi) \pm \sqrt{\left[\frac{2a}{\alpha} \cdot \tilde{t} \cdot cos(\Phi)\right]^2 - 4\left(\frac{a^2\tilde{t}^2}{\alpha^2} - \frac{i}{M\cdot\alpha^2}\right)} \right\} \qquad [\text{Eq. 6}]$$

where

$$\Phi = \varphi - \theta + (\omega_t - \omega_r)t.$$

Equation 6 may be re-written as Equations 6' and 6" as follows:

$$\tilde{s} = \frac{1}{\alpha}\left\{ -a \cdot \tilde{t} \cdot cos(\Phi) \pm \sqrt{a^2\tilde{t}^2 \cdot cos(\Phi) - a^2\tilde{t}^2 + \frac{i}{M}} \right\} \qquad [\text{Eq. 6'}]$$

$$\tilde{s} = \frac{1}{\alpha}\left\{ -a \cdot \tilde{t} \cdot cos(\Phi) \pm \left(\frac{i}{M}\right)^{1/2} \sqrt{\frac{a^2\tilde{t}^2 \cdot cos(\Phi) - a^2\tilde{t}^2}{(i/M)} + 1} \right\}$$

In some embodiments the isolation can be considered small enough so that $a$ may also be deemed sufficiently small to consider a Taylor development of $\sqrt{\dfrac{a^2\tilde{t}^2\cdot cos(\Phi)-a^2\tilde{t}^2}{(i/M)}+1}$ :

$$\sqrt{\frac{a^2\tilde{t}^2\cdot cos(\Phi)-a^2\tilde{t}^2}{(i/M)}+1}=1+\frac{1}{2}\left(\frac{a^2\tilde{t}^2\cdot cos(\Phi)-a^2\tilde{t}^2}{(i/M)}\right)+o^2(\frac{a^2\tilde{t}^2\cdot cos(\Phi)-a^2\tilde{t}^2}{(i/M)})$$

Which leads to the following for $\tilde{s}$:

$$\tilde{s}=\frac{1}{\alpha}\left\{-a\tilde{t}cos(\Phi)\pm\left(\frac{i}{M}\right)^{1/2}\left[1+\frac{1}{2}\left(\frac{a^2\tilde{t}^2\cdot cos(\Phi)-a^2\tilde{t}^2}{(i/M)}\right)+o^2(\frac{a^2\tilde{t}^2\cdot cos(\Phi)-a^2\tilde{t}^2}{(i/M)})\right]\right\}$$

[Eq. 7]

Equation 7 can also be rewritten as Equation 7':

$$\tilde{s}=\frac{1}{\alpha}\left\{-a\tilde{t}cos(\Phi)\pm\left(\frac{i}{M}\right)^{1/2}\left[1+\frac{a^2\tilde{t}^2}{2}\left(\frac{cos(\Phi)-1}{(i/M)}\right)+o^2(-)\right]\right\}\qquad[Eq.\ 7']$$

Given that $\tilde{s}$ is a signal, only the positive solution may be retained for $\tilde{s}$, which leads to:

$$\tilde{s}=\frac{1}{\alpha}\left\{-a\tilde{t}cos(\Phi)+\left(\frac{i}{M}\right)^{1/2}\left[1+\frac{a^2\tilde{t}^2}{2}\left(\frac{cos(\Phi)-1}{(i/M)}\right)+o^2(-)\right]\right\}\ [Eq.\ 8]$$

Equation 8 can also be rewritten as Equation 8':

$$\tilde{s}=\frac{1}{\alpha}\left\{\left(\frac{i}{M}\right)^{1/2}-a\tilde{t}cos(\Phi)+\frac{a^2\tilde{t}^2}{2}\left(\frac{cos(\Phi)-1}{(i/M)^{1/2}}\right)\right\}+o^2(-)\quad[Eq.\ 8']$$

where

$$\Phi=\varphi-\theta+(\omega_t-\omega_r)t.$$

The signal $\tilde{s}$ transmitted by the distant source may then be approximated as follows:

$$\tilde{s}=\frac{1}{\alpha}\left\{\sqrt{\frac{i}{M}}-a\tilde{t}cos(\theta-\varphi+[\omega_s-\omega_t]t)\right\}\qquad[Eq.\ 9]$$

where $a$ and $\alpha$ are parameters which represent the amplitude attenuation induced by propagation over the backward channel and the forward channel, respectively, and where $\theta$ and $\varphi$ are the phase shifts induced by the forward channel and backward channel, respectively. Indeed, filters used to filter the interferences may be chosen so that $\dfrac{a}{\alpha}\ll 1$, so that the term $\dfrac{a^2\tilde{t}^2}{2}\left(\dfrac{cos(\Phi)-1}{(i/M)^{1/2}}\right)\ll a\tilde{t}cos(\Phi).$

As discussed above, in some embodiments these parameters may be considered as independent from time at the first order. In contrast, their frequency-dependency may be taken into account.

Eq. 9 shows that an interference component induced by the transmission by the transceiver of the signal $T$ on a transmission link that includes the optical fiber on which a signal $S$ is received may be determined by characterizing the backward channel which represents a combination of contribution signals induced from respective backward propagations of the transmitted signal $T$ along its transmission path.

In one or more embodiments, the backward channel may be characterized through a determination of an estimate of the attenuation coefficient $a$ corresponding to the backward channel. Then an estimate of the signal $\tilde{s}$ may, in embodiments, involve a determination of an estimate of the attenuation coefficient $\alpha$ corresponding to the forward channel. Depending on the embodiment of the receiver of the transceiver, estimates of $\alpha$ and $a$ may be obtained concurrently or sequentially.

That is, an estimate of the attenuation coefficient $\alpha$ corresponding to the forward channel may be already available in some embodiments, for example from measurements performed at system deployment or during system configuration. In other embodiments, an estimate of the attenuation coefficient $\alpha$ may also be determined using a transmission of a known signal from the distant source while all other transmitters of the network, including the transmitter of the transceiver of interest, are silenced, as will be described below in further details.

In one or more embodiments, the backward channel may be further characterized through a determination of an estimate of the phase shift coefficient $\theta - \varphi$ corresponding to the forward and backward channels. As indicated above with respect to $\alpha$ and $a$ components, $\theta$ and $\varphi$ are time-varying components with a time constant of the order of magnitude of that of the channel, that is, with a time constant which is significantly smaller than that of $\omega_r$ and $\omega_t$, as well as that of the difference between $\omega_r$ and $\omega_t$.

That is, depending on the embodiment, a determination of the interference component corresponding to backward propagations of the optical signal $T$ transmitted by the transceiver may comprise a determination of an estimate of the coefficient $\overline{at}$ corresponding to the backward channel, a determination of an estimate of the attenuation coefficient $\alpha$ corresponding to the forward channel, and/or a determination of an estimate of the phase shift coefficient $\theta - \varphi$ corresponding to the forward and backward channels. In some embodiments, the determination of the attenuation coefficient $\alpha$ may be performed, assuming that there is no interference, using standard estimation and equalization techniques applied to the expected signal $S$.

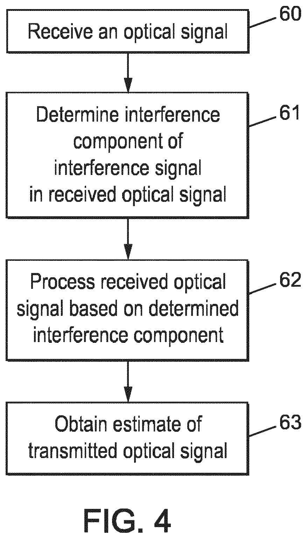

Figure 4 illustrates an exemplary embodiment of a proposed method for receiving signals at an optical transceiver of an ODN network according to the present subject disclosure.

A receiving side of the transceiver (for example the optical receiver (55) of the transceiver (50) shown on Fig. 3) receives (60) a received optical (RxO) signal, which received optical signal corresponds to a first transmit optical signal (TxO) carrying the data transmitted by an optical source, e.g. a laser source, on a first transmission link that includes an optical fiber.

As discussed above the received RxO signal includes an interference signal, which is itself composed of one or more interference components, one of the interference components being induced by transmissions performed by the transmitting side of the transceiver (for example the optical transmitter (53) of the transceiver (50) shown on Fig. 3).

An estimate of an interference component of an interference signal in the received optical signal, which is induced by transmission by the transmitting side of the optical transceiver (53) of a second TxO signal on a second transmission link that includes the optical fiber, is then determined (61).

Therefore the proposed scheme for receiving optical signals accounts for interferences, in the optical signal received at the receiving side of the transceiver, induced by the optical signal transmissions performed at the transceiver itself.

In one or more embodiments, the determining the interference component may comprise characterizing a combination of contribution signals induced from respective backward propagations of the transmitted second TxO signal.

Based on the determined interference component, the received RxO signal is processed (62), so as to obtain (63) an estimate of the first TxO signal, and to remove such estimate from the received RxO signal. Further details on this processing in one or more embodiments are provided below.

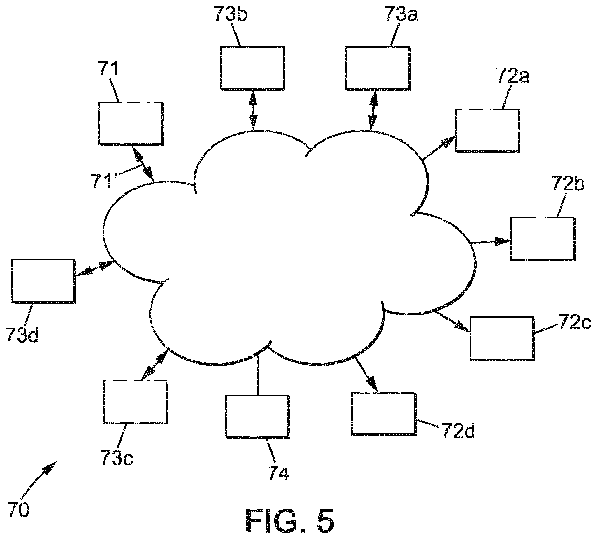

Figure 5 shows an optical distribution network 70 which comprises a plurality of interconnected nodes, including a transceiver device 71 according to one or more embodiments of the present subject disclosure, one or more optical receiver devices 72a - 72d, one or more optical transceiver devices 73a-73d, and an operation and management node 74.

The operation and management node 74 is interconnected with the transceiver 71, the transceivers 73a - 73d, and the receivers 72a - 72d through the ODN 70 so that it can exchange messages with the transceiver 71, the transceivers 73a - 73d, and the receivers 72a - 72d.

The transceiver of interest 71 is connected to the ODN 70 through a single optical fiber 71', on which it transmits and receives wavelength division multiplexed optical signals, for example according to the multiplexing scheme illustrated on Fig. 2.

It will be appreciated by those having ordinary skill in the relevant art that the network 70 shown on Fig. 5 is merely an example illustrating an ODN on which embodiments of the present subject disclosure may be implemented. In particular, any suitable network topology or architecture, such as, for example, a tree topology or a mesh topology, may be used for network 70, and that the architecture shown on Fig. 5 is given by way of example only. In addition, any suitable architecture may be used for each of the network nodes 71, 72a - 72d, 73a - 73d, and 74. For example, each of the receiver devices 72a - 72d may be a standalone device or may be integrated in an optical transceiver.

An exemplary operational procedure for backward channel acquisition as applied to the network illustrated on Fig. 5 is described below.

Depending on the embodiment, the following operational procedure, or variations thereof, may be performed as the network 70 is set up, during network updates, which may be carried out on a preferably long-term, possibly periodic, basis, and/or upon external request, that is a request received from an operation and maintenance center of the network 70.

In one or more embodiments, the proposed procedure may use Optical Time Domain Reflectometry (OTDR), through the sending of an OTDR signal in the network in order to carry measurements of parameters of interest.

In one or more embodiments, the operational procedure may be performed after a period of inactivity in the network, which period of inactivity may be chosen not shorter than a predefined time period ($T_{otdrRefresh}$). Depending on the embodiment, the predefined time period may be set to address a specific context. For example, in some embodiments, in the case of an operator-controlled network, the predefined time period may correspond to maintenance operations on the network, and may for example vary from a few hours to a few months. In some embodiments, the operational procedure may also be scheduled to account for the effects of aging of the system components, in which case the predefined time period may be set to a few months. In some embodiments, where the network nodes include component that are sensitive to temperature (including, for example, to temperature changes, for example between day temperatures and night temperatures, or between temperatures under sun exposure and without sun exposure), the predefined time period may be set in the order of a few milliseconds. In some embodiments, the predefined time period may be set as a combination of some or all of the above context-specific predefined time periods.

For example, in the use case where one of the end point of a bidirectionnal point-to-point optical link is located at the top of an antenna mast, temperature variations (e.g. between day and night, or during the time that a cloud passes over the end point) will influence the operations of the laser chip component of the BiDi transceiver, so that the predefined time period may be set in the order of 10 milliseconds.

In some embodiments, the period of inactivity may be determined based on estimates of derivatives of temperature variations over a time period. In some embodiments, the predefined time period may also be updated, including dynamically, in order to adapt the operations of the BiDi transceiver to varying conditions. For example, the predefined time period may be updated from a few milliseconds to a longer duration (e.g. 1 hour) in the cases where the temperature variations around the BiDi transceiver change over time. In some embodiments, the predefined time period may be dynamically adjusted, for example based on the derivative of temperature variations around the BiDi transceiver.

Assuming that execution of the procedure has been triggered, the management node (74) sends a request to each of the transmitters (transceivers 73a - 73d) of the network (70) for an OTDR silent, starting at a predefined time $t_m$, and lasting for a time duration $T_m$. Relevant parameters may be communicated to destination nodes as payload of a request message, or may have been pre-configured at the transmitters. Depending on the embodiment, protocols such as the Optical Network Unit (ONU) management protocol OMCI (for ONU Management and Control Interface), specified by the ITU-T as the ITU-T G.988 recommendation, or the Physical Layer Operations and Maintenance (PLOAM) protocol, specified by the ITU as a GPON specification, may be used for the message transmissions described in the present subject disclosure. In some embodiments, a specific layer 2 channel, such as for example an Ethernet channel, may also be used for the message transmissions described in the present subject disclosure.

In one or more embodiments, the management node (74) determines whether an acknowledgment response of the request has been received from all receivers of the network. A positive acknowledgement response of a receiver may typically carry information indicating that the request has been received, and can be serviced by the receiver. For instance, the positive acknowledgement response may confirm that the OTDR silent can be performed using the relevant parameters, including the requested starting time ($tm$) and the requested duration ($T_m$). Depending on the embodiment, the acknowledgment response may be explicit or implicit.

In one or more embodiments, respective requested starting time parameter ($tmi$) values may be determined for each transceiver other than the transceiver of interest based on the requested starting time ($tm$) for the transceiver of interest, so that the transceiver of interest does not receive at its receiver side any signal besides the OTDR signal as of the time $tm$. For example, the $tmi$ parameter for a transceiver $i$ (other than the transceiver of interest) may be determined based on a respective distance between the transceiver $i$ and the transceiver of interest. For example, the OTDR procedure may be configured so that each transceiver $i$ other than the transceiver of interest stops transmitting at $tmi = tm - \frac{Li}{n \times c}$, where $Li$ represents the distance between the transceiver of interest and a transceiver $i$ (other than the transceiver of interest), $n$ is the optical index of the optical link between the transceiver of interest and the transceiver $i$, and $c$ is the speed of light in vacuum. In some embodiments, the OTDR management may determine $tmi$ parameters, based on the *tm* parameter, and on the respective distance *Li* between the transceiver of interest and a transceiver *i* (other than the transceiver of interest), for example using the following determination: $tmi = tm - \frac{Li}{n \times c}$, and communicate the determined *tmi* parameter to the transceiver *i* for purposes of the OTDR procedure described herein.

In one or more embodiments, respective requested duration parameter (*Tmi*) values may be determined for each transceiver other than the transceiver of interest based on the requested duration (*Tm*) for the transceiver of interest, so that the transceiver of interest does not receive at its receiver side any signal besides the OTDR signal during the duration *Tm*. For example, the *Tmi* parameter for a transceiver *i* (other than the transceiver of interest) may be determined based on a respective distance between the transceiver *i* and the transceiver of interest or, depending on the embodiment, based on a determined starting time *tmi* parameter for the transceiver *i*. In some embodiments, the OTDR management may determine *Tmi* parameters, based on the *Tm* parameter, and communicate the determined *Tmi* parameter to the transceiver *i* for purposes of the OTDR procedure described herein.

A negative acknowledgement response of a receiver may typically carry information indicating that the request has been received, however cannot be serviced by the receiver. A negative acknowledgment response may also be considered received in a case where no acknowledgment response, whether positive or negative, has been received from the receiver after a predetermined period of time starting with the sending of the request.

In one or more embodiments, in the cases where the management node determines that one or more negative acknowledgement responses have been received, a new request for an OTDR silent may be sent to each of the receivers (72a, 72b, 72c, 72d) of the network (70), with the same parameters or with different parameters. For example, a new starting time Tm' and/or a new duration Tm' may be proposed to the receivers of the network.

In one or more embodiments, a time duration $T_m$ for an OTDR silent request may be determined based on a frame period $T_{otdr}$, and on the length of the OTDR pattern signal at a given wavelength (point). The frame period may for instance be determined as $T_{otdr} = \frac{L_{max}}{n \times c}$, where $L_{max}$ is the maximum length of the optical link (typically a fiber) connected to the transceiver (71) under test, *n* is the optical index of the optical link, and *c* is the speed of light in vacuum, so that the time duration $T_m$ may be determined as $T_m = \frac{L_{max}}{n \times c} + duration\ of\ the\ OTDR\ pattern$ where *duration of the OTDR pattern* is the duration of the OTDR pattern. In other embodiments, the frame period may be determined as $T_{otdr} = \frac{k \times L_{max}}{n \times c}$, where $L_{max}$ is the maximum length of the optical link connected to the transceiver (71) under test, *n* is the optical index of the optical link, *c* is the speed of light in vacuum, and k is a guard period parameter (k ≥ 1), so that the time duration $T_m$ may be determined as $T_m = \frac{k \times L_{max}}{n \times c} + duration\ of\ the\ OTDR\ pattern$, where *duration of the OTDR pattern* is the duration of the OTDR pattern. Said otherwise, $n \times c$ is the speed of light in the optical link. $T_m$ may preferably be chosen greater or equal to $T_{otdr}$, so that the backward channel may be sounded for a sufficient amount of time, that is, during a time frame that is at least equal to $T_{otdr}$.

The transmitter of the transceiver (71) then transmits an OTDR pattern signal, that is, an optical signal carrying a known pattern (OTDR pattern), at a wavelength point which may correspond to any operation wavelength envisioned for the transceiver (71), starting at time *tm.* For example, in cases where the transceiver (71) is to be used according to the multiplexing scheme illustrated on Fig. 2, the transceiver (71) would repeat the transmission of the OTDR pattern signal for each of the four transmission operational wavelength shown on Fig. 2. The preliminary phase described above for obtaining a transmission silence at all transmitters of the network may be repeated for the transmission at each of these operational wavelengths.

In some embodiments, the preliminary phase described above may be performed at the setup of the system, so that all the operational wavelengths to be tested for channel estimation may be tested at once during the setup of the system. Although the preliminary phase performed at setup may take a long time to complete, it has the advantage of performing a complete scan of the operational wavelengths without using any resource of the system once the system is running.

In other embodiments, the preliminary phase described above may be performed during operation of the system. For example, the system may be configured for automatic learning along the use of a wavelength. Each time the system is to use a wavelength for which the preliminary phase test has not be performed, such test is performed, and the results are stored in memory so that there is no need to perform the test again. Although this strategy for performing the preliminary phase uses system resources once the system is running (during operation of the system), it advantageously avoids a lengthy preliminary phase at setup of the system, which is therefore streamlined. This strategy also takes advantage of the fact that the likelihood of use of all the system resources during the first stages of system operation is rather low in practice.

Depending on the embodiment, the chosen wavelength points can be any parameter that can be explicitly or implicitly related to a given operation wavelength. For example, for a laser light source it may be the value of the temperature of the source chip.

In one or more embodiments, the OTDR pattern may comprise a "1" followed by consecutive zeros, therefore corresponding to a Dirac impulse, in order to measure the impulse response of the backward channel.

In one or more embodiments, the OTDR pattern may be a pattern that is composed of frequency pilots generated in an analogue or a digital way.

The receiver of the transceiver of interest (71) acquires in memory a received signal over the $T_{odtr}$ time frame, which received signal corresponds to the backward propagations of the transmitted OTDR pattern signal. In embodiments where the transmitted OTDR pattern corresponds to an impulse, the received signal acquired at the receiver of the transceiver (71) corresponds to the impulse response of the backward channel. In some embodiments, the OTDR pattern may correspond to a plurality of frequency peaks, which may cover a frequency spectrum that corresponds to that of the signals to be transmitted by distant source to the transceiver of interest, so as to acquire at the receiver of the transceiver of interest a transfer function, based on which an impulse response of the backward channel may be determined. For example, in some embodiments, the transfer function (and thus implicitly the impulse response) may be retrieved by performing a Fast Fourier Transform (FFT) over OTDRFFTWindow/Ts samples, where Ts is a sample time duration and OTDRFFTWindow is a FFT window width (each parameter being, depending on the embodiment, predetermined or dynamically determined), so as to obtain estimates of amplitude and phase responses of the backward channel.

In some embodiments, the transmitted OTDR pattern may include a sequence of 0-bits and 1-bits, chosen with specific arithmetic properties so that synchronisation can be achieved using the transmitted OTDR pattern. The impulse response of the channel may then be obtained from the received signal using an inverse convolution with the known transmitted OTDR pattern. A binary sequence is also advantageous in that it avoids the risk of noise over the transmission of a single bit, and makes it easier to synchronize than based on a single bit transmission.

In one or more embodiments, the above signal acquisition may be repeated and then averaged in order to reach a predetermined signal-to-noise (S/N) ratio for the signal acquisition. In some embodiments, it may be considered that there is no significant interference if the predetermined S/N ratio is not reached after a predetermined number of averaged successive signal acquisitions.

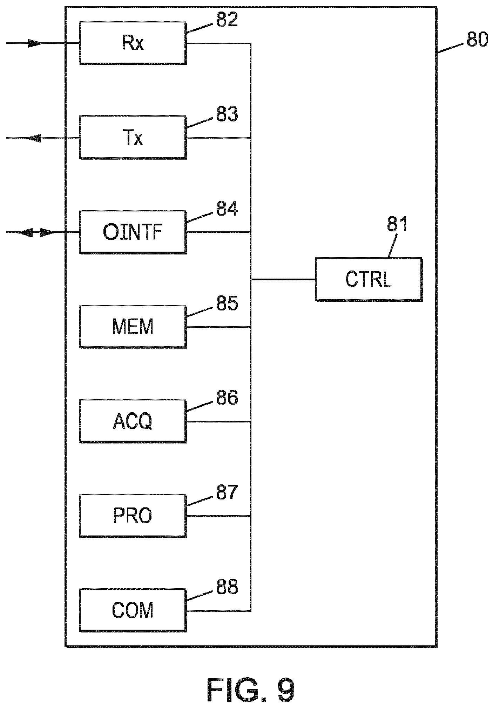

The above signal acquisition may lead to a high number of bits stored in memory. Depending on the embodiment, those bits may be stored at a local memory of the transceiver, and processed at the transceiver, or transmitted to a distant processing node for further processing as described in reference with Fig. 9 below. For example, for a given acquisition time frame $T_{odtr}$, and a given symbol duration $T_s$, $\dfrac{T_{OTDR}}{T_s}$ samples are acquired in memory. Assuming a given number of bits per symbol *numberOfBitsPerSymbol,* the memory space required to store

$$\frac{T_{OTDR}}{T_s} \times numberOfBitsPerSymbol$$

may go up to 20 Mbits: indeed, for a 40 km-long fiber, $T_{odtr}$ may be chosen equal to $400\mu s$, the acquisition rate may be equal to 10 Gbps, and for 4Mbits at a rate of 25GHz, 10Mbits should be stored for further processing, which become 20 Mbits if oversampled with an oversampling factor equal to 2.

In order to avoid memory overflow at the transceiver, in some embodiments the transceiver may comprise an OTDR management module configured for performing a thresholding of the length of the acquired sequence by only retaining the time of the beginning of a significant sequence and the bits of such significant sequence. In some embodiments, a sequence may be determined as significant upon determining that it comprises a predetermined number of consecutive samples that are above a predetermined threshold $Th_{OTDR}$. Therefore a thresholding analysis may be performed based on the acquired data to determine a sequence comprising consecutive samples that are above the $Th_{OTDR}$ threshold. In some embodiments, data sequences with no significant values, that is, no sample above the $Th_{OTDR}$ threshold, may be discarded as part of the thresholding analysis to save memory space.

OTDR data resulting from the OTDR processing may then be transmitted from the transceiver (71) to the management node (74). In one or more embodiments, upon completion of the data acquisition and processing (possibly including a thresholding analysis), the transceiver (71) may send to the management node (74) an OTDR information message (using for example the OMCI, PLOAM, or Ethernet protocol) that includes the wavelength points used for the OTDR transmissions, both at the transmitter side of the transceiver (71) and at the receiver side of the transceiver (71), and the acquired data. In cases where a thresholding analysis is performed, the acquired data transmitted to the management node (74) may comprise the sequence resulting from the thresholding analysis, and a start time of such sequence.

OTDR information received at the management node (74) may be stored in one or several look-up tables (referred to herein as backward channel (BCh) tables) in which the wavelength points of both the transmitter side of the transceiver (71) and the receiver side of the transceiver (71) are stored in association with corresponding acquired data, possibly in the form of a start time and corresponding samples of an acquired sequence corresponding to the wavelength points.

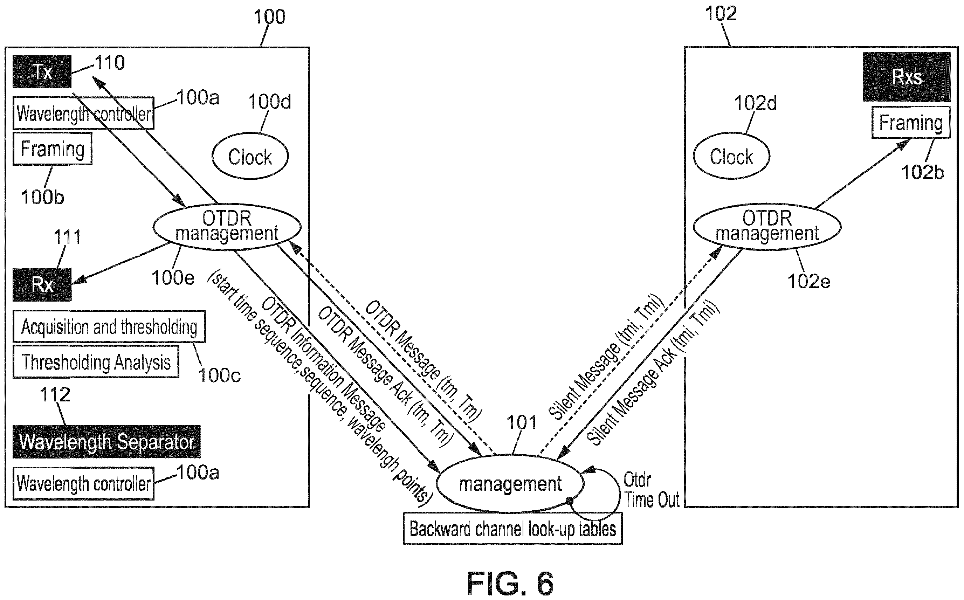

Figure 6 illustrates the backward channel knowledge procedure described above in one or more embodiments.

Shown on Fig. 6 are a transceiver of interest (100) according to embodiments of the present subject disclosure, an operation and management node (101), and one or more transceivers (102) that may transmit data to the transceiver of interest (100). The operation and management node (101), the transceiver of interest (100) and the one or more transceivers (102) are communicatively coupled, for example through an optical distribution network such as the one illustrated by Figure 5.

The transceiver (100) may include a transmitter (110), a receiver (111), and a wavelength separator (112), which in some embodiments may be substantially similar to the ones illustrated by Figure 3.

The transceiver (100) may be configured with a wavelength control engine (100a), a framing engine (100b), and an acquisition and thresholding engine (100c). The wavelength control engine (100a) may be configured to operate at the transmitter (110) and at the wavelength separator (112). The framing engine (100b) may be configured to control and manage time parameters for the transmission and/or reception of data, and may be implemented in some embodiments as a state machine that organizes the time distribution of state changes so as to configure time sequences of transmitted and/or received data. The acquisition and thresholding engine (100c) may be configured to operate at the receiver (111), that is, on data and/or signals received by the receiver (111).

The acquisition and thresholding engine (100c) may be configured to perform data acquisition operations as well as a thresholding analysis on acquired data as described above with respect to the proposed backward channel knowledge acquisition procedure.

The transceiver (100) may further include a clock engine (100d) configured to time manage the operations (including data processing operations) performed at the transceiver (100), and an OTDR management engine (100e) configured to control the backward channel knowledge acquisition operations at the transmitter (110) and receiver (111) of the transceiver (100).

Each of the other transceivers (102) may include a framing engine (102b), a clock engine (102d) configured to time manage the operations (including data processing operations) performed at the transceiver (102), and an OTDR management engine (102e) configured to control the backward channel knowledge acquisition operations at the transceiver (102).

As shown on Fig. 6, the management node (101) may be configured to send a request for an OTDR procedure, starting at a predefined time *tm,* and for a duration *Tm,* illustrated by a *OTDR_Message*(*tm,Tm*) message on Fig. 6, to the transceiver of interest (100). In response, the management node (101) may receive from the transceiver of interest (100) an acknowledgment message, illustrated by a *OTDR_Message_Ack*(*tm,Tm*) message on Fig. 6, confirming that OTDR procedure can be performed, starting at time *tm,* and for a duration *Tm.*

The management node (101) may further be configured to send a request for an OTDR silent, starting at the determined time *tmi,* and for the determined duration *Tmi,* illustrated by a *Silent_Message*(*tmi,Tmi*) message on Fig. 6, to each of the one or more transceivers (i) (102). In response, the management node (101) may receive from each of the one or more transceivers (102) respective acknowledgment messages, illustrated by an exemplary *Silent_Message_Ack*(*tmi,Tmi*) message on Fig. 6, confirming that the OTDR procedure can be performed in the network, starting at the time *tm,* and for the duration *Tm* at the transceiver of interest.

The OTDR procedure may in some cases time out if a positive acknowledgment for an OTDR silent with given start and duration parameters cannot be obtained from all the receivers to whom a request for OTDR silent has been sent.

The OTDR management engine (100e) of the transceiver may be configured to then control the transmission by the transmitter (110) of an OTDR pattern, during the time period of OTDR silences.

The OTDR management engine (100e) of the transceiver may be further configured to control the acquisition and thresholding engine (100c) so as to perform data processing that includes data acquisition and, depending on the embodiment, a thresholding analysis on acquired data.

The data processing for backward channel knowledge acquisition performed on data received at the receiver (111) of the transceiver (100) may in some embodiments result in the generating of one or more look-up tables (LUTs) referred to herein as backward channel look-up tables, or Bch look-up tables, which may be stored in a memory of the management node (101), further to the transmission of the data acquisition and, possibly, thresholding procedure, results to the management node (101) (illustrated by a *OTDR_Infrmation_Message*(*start time sequence, sequence, wavelength points*) message on Fig. 6. In the exemplary *OTDR_Information_Message*(*start time sequence, sequence, wavelength points*) m essage, the *start time sequence* parameter may indicate a time at which the OTDR signal is to be sent, the *sequence* parameter may indicate the OTDR sequence or signal to be used, and the *wavelength points* parameter(s) may provide information related to the wavelength(s) used by the transmitter of the transceiver of interest during the OTDR procedure.

As discussed above, an interference component comprised in an interference signal present in the optical signal received by the receiver of the optical transceiver can be viewed as a variation in time of the difference between two frequencies, which variation may be expressed as a variation of $\Delta\omega = \omega_s - \omega_t$ in Equation 9 above.

In one or more embodiments, an estimate of this interference component can be determined through a detuning measurement procedure, in order to determine estimates of the positions of the wavelengths of the two interfering signals (first transmit optical signal transmitted by a distant source and second transmit optical signal transmitted by the transceiver) relative to each other. Once the respective positions of the wavelengths of the two interfering signals are determined, an interference component resulting from a variation of a distance between these respective positions can also be determined and corrected.

In some embodiments, a detuning measurement procedure may also be performed on an optical distribution network comprising a BiDi transceiver, such as the network illustrated on Fig. 5.

Detuning measurement procedures are advantageously used in optical networks, in particular in networks where the network operator wants to relax the constraints on the tuning system (e.g. relax the constraints related to component tolerance, or increase the update period to reduce signaling overhead), or in cases where directly modulated laser (DML) sources are used.

A detuning measurement procedure may typically be performed regularly, so as to estimate the detuning or anticipate the detuning.

In some embodiments, an instantaneous global detuning knowledge can be obtained based on a self-heterodyne technique. However, unless a dedicated system and procedure are set up, the known determination of the detuning, based on measuring the level of a signal at the output of a heterodyne mixing and a low pass filter in the range of the detuning to be evaluated, cannot be used since other filtering elements which figures may be unknown or time varying may alter the detuning measurement.

According to the present subject disclosure, a direct measure of the beat induced by the detuning to retrieve a value of the cos function of the detuning is preferred, since the system intrinsically can sample the signal as fast as the bandwidth of interest (e.g. in the order of a few tens of Giga-samples per second (GSps)). Depending on the embodiment, a value of the cos function of the detuning can be obtained by performing cross-correlations with a set of $\cos(\omega_t)$ functions, or using a fast Fourier transform (FFT) and a search for an existing peak over the set of FFT coefficients over a predetermined number (FmDetuning/Ts) of samples.

In one or more embodiments, the proposed detuning measurement procedure according to the present subject disclosure may use one or more of the following parameters:

As to the wavelength point parameters, a Tx wavelength point, WS wavelength point, and Rxs wavelength point parameters may be defined, which respectively correspond to information relating to wavelengths used at the transmitter of the transceiver of interest, information relating to wavelengths used at a wavelength separator of the transceiver of interest, and information relating to wavelengths used at the transmitter of other transceivers in the network that may send data to the transceiver of interest.

A transmitter-side and receptor-side guard time parameters may also be defined (*Tx_RampUp_GT* and *Rxs_RampUp_GT*) to account for the ramping up of the lasers of the transmitters of the transceivers of the network (in particular in cases of recent turn-on/off).

A transmitter-side detuning frame (*FRxsmDetuning*) of length *TFRxsmDetuning* bits may be defined, with a predetermined pattern (*SmDetuning pattern*), with respect to transmitters of transceivers (other than the transceiver of interest) in the network that may send data to the transceiver of interest.

A transceiver transmitter-side frame (*FTxmDetuning*), of length *TTxmDetuning* bits, may also be defined, with respect to the transmitter of the transceiver of interest.

A transceiver receiver-side frame (*FRxmDetuning*), of the same length (*TTxmDetuning* bits), may also be defined, with respect to the receiver of the transceiver of interest.

According to the proposed detuning measurement method, and referring back to Fig. 5, a message is sent (e.g. by the management node (74)) to each of the transceivers of the network that may send data to the transceiver of interest to request a SmDetuning Pattern, that starts at a time that corresponds to the instant of reception to which a predefined time *tm* may be added, and that lasts *TFRxsmDetuning*. Depending on the embodiment, predefined time (*tm*) information may be included in the message, included in a signaling channel, or defined implicitly using a default value.

A transceiver transmitter-side frame (*FTxmDetuning*) may be started at a time *tm* + *RTT*/2, where RTT corresponds to the estimated round trip time of the transmitted messages, that lasts *TTxmDetuning*.

A transceiver receiver-side frame (*FRxmDetuning*) activation may be started at the time *tm* + *RTT*/2, that lasts *TTxmDetuning*.

The signal received at the transceiver (71) may then be acquired during *FRxmDetuning*.

Further to the signal acquisition at the transceiver (71), the acquired signal may be provided to a signal processing unit for filtering analysis. Depending on the embodiment, the signal processing unit may be implemented at the transceiver, or in a distant processing node as described in reference with Fig. 9 below.

As described above, the filtering analysis will provide an estimate of a differential phase shift (dps ($\theta - \varphi$ in Eq. 9) that includes the phase itself and its origin modulo $2\pi$ within the time symbol). Such estimate may be stored in memory, together with the set of wavelength points and a differential phase shift reference *dpsr.* Indeed, the wavelength point at the receiver of the transceiver can be obtained, without any explicit message from the receiver or other transceivers of the network, based on the knowledge of the wavelength points at the transmitter of the transceiver. In the backward channel (BCh) look-up table, the wavelength point status of the receiver of the transceiver, can be obtained using an interpolation of previous measurements. As discussed below, tt can then also be anticipated for the time period before the next detuning measurement.

In one or more embodiments, the detuning measurement procedure may be triggered periodically, using a detuning measurement time period that may be predetermined, or updated dynamically according to the recent status of the transceiver, the dynamic of the detuning, and/or by anticipation.

In embodiments where the detuning measurement time period is updated dynamically according to the dynamic of the detuning, the detuning measurement procedure may for example be started with a fine time granularity measurement period, for the acquisition, defining a *Detuning Granularity Threshold*, by linear or non-linear interpolation of the previous measurement to set the following periods. Said otherwise, the detuning measurement procedure may be configured so that if a measured detuning shows little or no variations over time, it may be estimated based on interpolation of previous measurements instead of actual renewed measurements.

In embodiments where the detuning measurement time period is updated dynamically by anticipation, e.g. in the case where one of the transceivers of the network that may send data to the transceiver of interest, or the transmitter of the transceiver of interest, have been previously switched-off, a set of varying time periods may also be defined.

In some embodiments, the round trip time (RTT) of the transmitted messages may be measured by means of known ranging procedures.

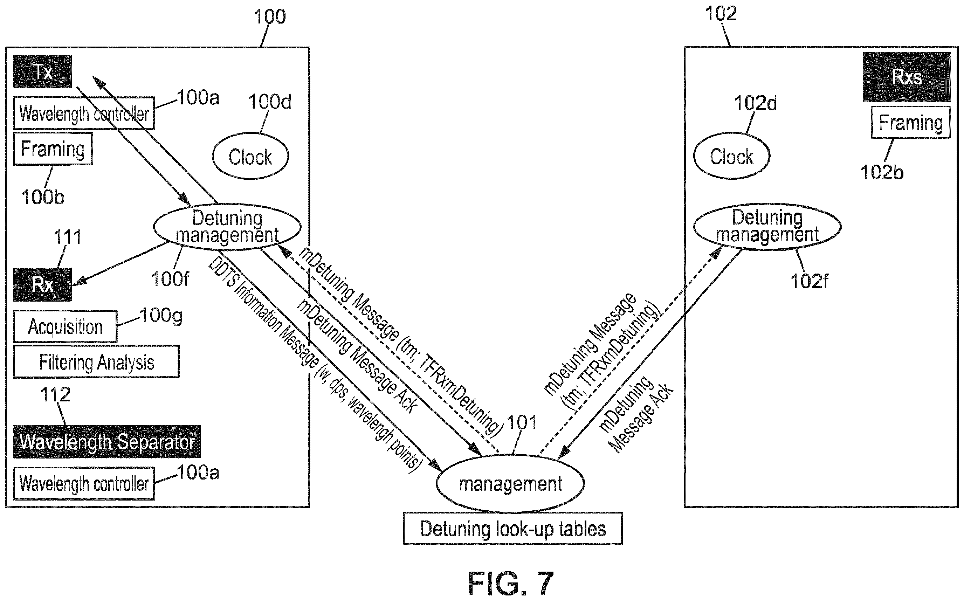

Figure 7 illustrates the detuning measurement procedure described above in one or more embodiments.

Shown on Fig. 7 are a transceiver of interest (100) according to embodiments of the present subject disclosure, an operation and management node (101), and one or more transceivers (102) that may transmit data to the transceiver of interest (100). The operation and management node (101), the transceiver of interest (100) and the one or more transceivers (102) are communicatively coupled, for example through an optical distribution network such as the one illustrated by Figure 5.

As described with reference to Fig. 6, the transceiver (100) may include a transmitter (110), a receiver (111), and a wavelength separator (112), which in some embodiments may be substantially similar to the ones illustrated by Figure 3.

The transceiver (100) may be configured with a wavelength control engine (100a), a framing engine (100b), and an acquisition and filtering engine (100g). The wavelength control engine (100a) may be configured to operate at the transmitter (110) and at the wavelength separator (112). The framing engine (100b) may be configured to control and manage time parameters for the transmission and/or reception of data, and may be implemented in some embodiments as a state machine that organizes the time distribution of state changes so as to configure time sequences of transmitted and/or received data. The acquisition and filtering engine (100g) may be configured to operate at the receiver (111), that is, on data and/or signals received by the receiver (111). In some embodiments, time parameters may be shared and managed over the network by means of a ranging procedure or dedicated synchronization protocols.

The acquisition and filtering engine (100g) may be configured to perform data acquisition operations as well as a filtering analysis on acquired data as described above with respect to the proposed detuning measurement procedure.

The transceiver (100) may further include a clock engine (100d) configured to time manage the operations (including data processing operations) performed at the transceiver (100), and a detuning management engine (100f) configured to control the detuning measurement operations at the transceiver of interest (100).

Each of the other transceivers (102) may include a framing engine (102b), a clock engine (102d) configured to time manage the operations (including data processing operations) performed at the transceiver (102), and an detuning management engine (102f) configured to control the detuning measurement operations at the transceiver (102).

As shown on Fig. 7, the management node (101) may be configured to send a detuning measurement request, starting at a predefined time *tm,* and for a time window of duration *TFRxmDetuning,* illustrated by a *mDetuning_Message*(*tm, TFRxmDetuning*) message on Fig. 7, to the transceiver of interest (100). In response, the management node (101) may receive from the transceiver of interest (100) an acknowledgment message, illustrated by a *mDetuning_Message_Ack* message on Fig. 7, confirming that detuning measurement can be performed with the parameters requested by the management node (101).

The management node (101) may further be configured to send a request for detuning measurement, starting at the time *tm,* and for the time window of duration *TFRxmDetuning,* illustrated by a *mDetuning_Message*(*tm, TFRxm-*

*Detuning*) message on Fig. 7, to each of the one or more transceivers (102). In response, the management node (101) may receive from each of the one or more transceivers (102) an acknowledgment message, illustrated by a *mDetuning_Message_Ack* message on Fig. 7, confirming that detuning measurement can be performed with the parameters requested by the management node (101).

The detuning management engine (100f) of the transceiver may be configured to then control the detuning measurement to the extent performed at the transmitter (110) and at the receiver (111) of the transceiver (100).

In particular, the detuning management engine (100f) of the transceiver may be configured to control the acquisition and filtering engine (100g) so as to perform data processing that includes data acquisition and a filtering analysis on acquired data as described above with respect to the proposed detuning measurement procedure.

The data processing for detuning measurement performed on data received at the receiver (111) of the transceiver (100) may in some embodiments result in the generating of one or more look-up tables (LUTs) referred to herein as detuning look-up tables, or mDetuning look-up tables, which may be stored in a memory of the management node (101), further to the transmission of the data acquisition and filtering results to the management node (101) (illustrated by a *DDTS_Information_Message(w, dps, wavelength points)* on Fig. 7. In the exemplary *DDTS_Information_Message(w, dps, wavelength points* detuning differential phase shift (DDTS) message of Fig. 7, the w parameter may indicate a measured detuning ($\omega_s - \omega_t$ as expressed in Eq. 9), the parameter *dps* may indicate a corresponding differential phase shift ($\theta - \varphi$ as expressed in Eq. 9), the parameter *wavelength points* may provide information related to the wavelength(s) by the transmitter of the transceiver of interest (*wptx*), the transmitter of other transceivers of the network (*wprx*), and/or the wavelength separator during the detuning measurement procedure.

In the following, a proposed method for performing compensation of the impairment resulting from the transmissions at the transmitting side of an optical transceiver using the above-described detuning and filtering procedure is described. The proposed method advantageously leverages the following points:

At a given sampling time at the transceiver, the field on the photodiode is a combination of the field from transmitters of the network other than the one of the transceiver of interest, and from a delayed version of the signal from the transmitter of the transceiver of interest (that may be characterized as resulting from the backward channel).

Since the detuning can vary in a sensitive way over a few μs, and the RTT is about several hundreds of μs, the consecutive contributions to the signal received at the receiver that result from the backward channel may have varying wavelengths, and therefore cover several wavelength points. It may therefore be advantageous to reconstruct the series of wavelength points over the time. In some embodiments, a vector of wavelength points at the transmitter is included in the BCh look-up table for this purpose.

In addition, the coefficients *a* and $\alpha$ may also depend on the wavelength points. In some embodiments, the wavelength point of Rxs at the sampling instant time is estimated in order to retrieve the signal according to Equation 9 above.

In one or more embodiments, the impairment resulting from the above-described interference component may be compensated for in the received optical signal estimation process.

In some embodiments, the compensation processing may include a multiplication of a phase term with the transformed transmitted signal sent by the transceiver, so as to for example compensate for a distortion introduced by a wavelength separator used by the transceiver of interest on the signal transmitted by the transmitter of the transceiver of interest, which distortion may impact the signal received by the receiver of the transceiver of interest, may be corrected by using in the proposed compensation scheme.

In other embodiments, for example where a wavelength separator used in the transceiver of interest does not introduce a phase transformation on the signal received by the receiver of the transceiver of interest (or introduces such a phase transformation at an insignificant level, for example which remains below a predefined threshold), the proposed compensation scheme may be configured so as to ignore distortions introduced by the wavelength separator. For example, the signal transmitted by the transceiver may not be multiplied with a phase term so as to not compensate for phase distortions introduced by the wavelength separator that are deemed insignificant. This may advantageously be used in cases where the filter of the wavelength separator has been designed so that it does not introduce any significant phase distortions.

In some embodiments, the compensation scheme may be configured to correct an interference induced by the wavelength separator based on a value of the wavelength point of the transmitter of the transceiver of interest relative to the value of the central frequency of the filter used for separating wavelengths in the wavelength separator. As the interference generated by the wavelength separator may depend on the wavelength point used by the transmitter, the compensation scheme may be configured to compensate for such interference only for wavelength points for which the interference is considered non insignificant, for example beyond a predefined threshold.

Therefore, the proposed compensation scheme advantageously allows to, depending on the embodiment, compensating only for amplitude distortions from backward reflections, or compensating for amplitude distortions from backward reflections as well as phase distortions from backward reflections, or dynamically configuring the compensation (amplitude only or phase and amplitude) depending on the wavelengths used by the transmitter of the transceiver.

In some embodiments, for example using the generation of the BCh look-up tables described above, the coefficients used for the compensation scheme may be selected in the backward channel (BCh) look-up tables according to the wavelength points used by the transmitter of the transceiver of interest (*wptx*), used by the transmitter of other transceivers of the network (*wprx*), and/or used by the wavelength separator during the detuning measurement procedure. The transformed (that is compensated) signal may the multiplication of the coefficient describing the backward channel with a window that slide by one at each clock instant and that contains the transmitted symbol sent by the transmitter of the transceiver.

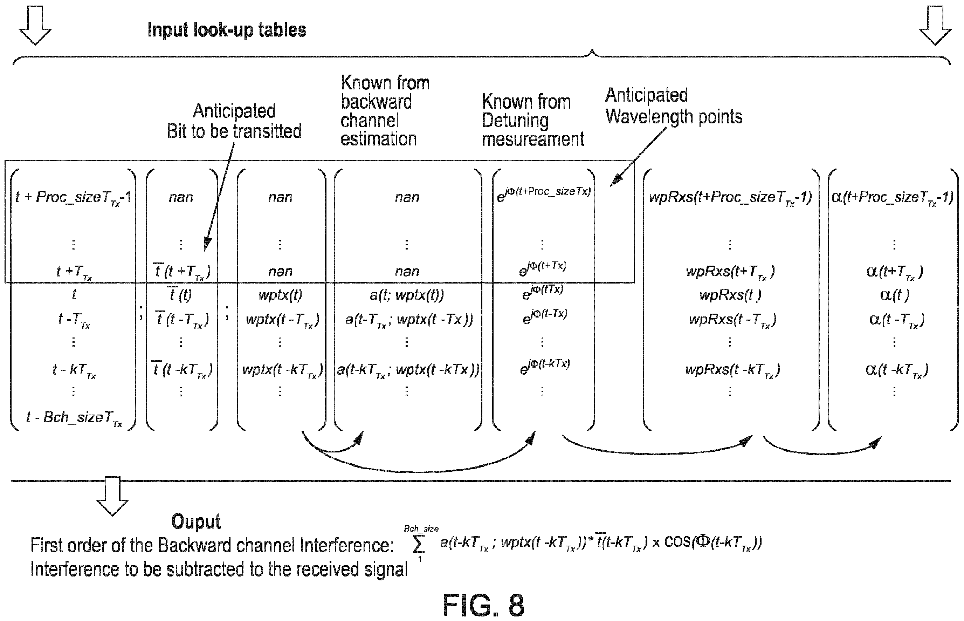

Fig. 8 illustrates the proposed method for performing compensation in one or more embodiments.

Shown on Fig. 8 are several input vectors that are used in the proposed processing, and which may have been generated according to the backward channel acquisition procedure or the detuning measurement procedure described herein, as the case may be.

Such input vectors may be stored in memory in the form of look-up tables as described above, and may be combined to generate output vectors according to the proposed processing in one or more embodiments.

Shown on the left handside of Fig. 8 is a vector having time values (referred to in the following as a "time vector"), spanning from a first time value $t - Bch\_size T_{Tx}$ to a last time value of $t + Proc\_size T_{Tx} - 1$, where $T_{Tx}$ is a time sampling step, *Bch_size* corresponds to the time depth of the backward channel as acquired, and *Proc_size* is a processing size parameter. The size of the time vector is therefore $T_{Tx}(Proc\_size + Bch\_size)$. The time vector may be split into a first set of values corresponding to the past and comprising values ($t, t - T_{Tx}, ..., t - k.T_{Tx}, ...,$ and $t - Bch\_size T_{Tx}$) representing a time sequence running from $t - Bch\_size T_{Tx}$ to the current time t, with a time sampling step $T_{Tx}$, and a second set of values corresponding to the future and comprising values representing a time sequence running from $t + T_{Tx}$ to $t + Proc\_size T_{Tx} - 1$, with the same time sampling step $T_{Tx}$. That is, the first set of time values spaced from one to the next by the time sampling step $T_{Tx}$ may be expressed as $\{t - k.T_{Tx}\}_{k=0,...,Bch\_size}$, and the second set of time values spaced from one to the next by the same time sampling step $T_{Tx}$ may be expressed as $\{t + l.T_{Tx}\}_{l=1,...,Proc\_size}$. The exemplary time vector illustrated on Fig. 8 therefore spans the past with a depth equal to *Bch_size,* and the future with a depth equal to *Proc_size.* In the embodiment illustrated on Fig. 8, time values in the future are used which allows anticipating on what will be transmitted in the future.

Depending on the embodiment, the processing may be performed on acquired data corresponding to a time window spanning only past values with a first predetermined depth, or corresponding to a time window spanning past and future values with a second predetermined depth.

The next vector (immediately to the right of the time vector on Fig. 9) holds values corresponding to the sequence of bits or binary symbols transmitted by the transceiver at a time corresponding to the value of the time vector which is adjacent to the value corresponding to the transmitted bit (referred to in the following as a "transmitted signal vector") at the current time t, the bit value $\tilde{t}(t)$ was transmitted, at the time $t - T_{Tx}$, the bit value $\tilde{t}(t - T_{Tx})$ was transmitted, ..., at the time $t - k.T_{Tx}$, the bit value $\tilde{t}(t - k.T_{Tx})$ was transmitted, ..., and at the time $t - BCH\_size.T_{Tx}$, the bit value $\tilde{t}(t - BCH\_size.T_{Tx})$ was transmitted. The values of the transmitted signal vector corresponding to time values in the future represent bits whose transmission in the future is anticipated. For example, the transmitter of the transceiver may hold in memory the bit or symbol $\tilde{t}(t - T_{Tx})$ to be transmitted at time $t + T_{Tx}$. This advantageously allows in some embodiments to anticipate the processing of a bit or symbol, as long as such bit or symbol is stored in memory for transmission in the future, instead of waiting for the bit or symbol to actually be transmitted to at least engage in the corresponding processing as proposed in the present subject disclosure.

The next vector (immediately to the right of the transmitted signal vector on Fig. 9) holds values corresponding to wavelength points at the transmitter of the transceiver (wptx values) at a time corresponding to the value of the time vector which is adjacent to the value corresponding to the transmitted bit which is itself adjacent to the wptx value (referred to in the following as "transmit wavelengths vector"): at the t, the bit value $\tilde{t}(t)$ was transmitted with wavelength $wptx(t)$, at the time $t - T_n$, the bit value $\tilde{t}(t - T_{Tx})$ was transmitted with wavelength $wptx(t - T_{Tx})$, ..., at the time $t - k.T_{Tx}$, the bit value $\tilde{t}(t - k.T_{Tx})$ was transmitted with wavelength $wptx(t - k.T_{Tx})$, ..., and at the time $t - BCH\_size. T_{Tx}$, the bit value $\tilde{t}(t - BCH\_size.T_{Tx})$ was transmitted with wavelength $wptx(t - BCH_{size}.T_{Tx})$. The transmit wavelengths vector is therefore a vector of values representing wavelengths at different time values, with a length corresponding to the channel depth of the backward channel Bch_size.

In some embodiments, wavelength values corresponding to sub-sample time values (e.g. $wptx(t - dts)$ for a time value $t - dts$ where $dts < T_{Tx}$) may be determined. Indeed, the detuning under interest does not vary in a stochastic manner from a time symbol to the next, but rather corresponds to a physical value that varies continuously. Therefore an interpolation could be performed based on a derivative, e.g. a first order derivative or a second order derivative, top achieve a sub time sampling step resolution for the proposed processing. Such may be particularly useful to anticipate on the bits/symbols to be transmitted, as wavelength point values corresponding to the next symbol to be transmitted, or to the plurality of symbols to be transmitted next may be estimated, so that the next symbol to be transmitted, or to the plurality of symbols to be transmitted next may be stored in memory, and therefore known, as well as the corresponding wavelength points.

Referring back to the backward channel complex impulse response function $H_{cp} = ae^{j\varphi}$, and to the frequency-domain representation of the second received signal described above by Equation 2, wavelength values of the transmit wavelength vector at past time points ($\{t - k.T_{Tx}\}_{k=0,...,Bch\_size}$) may also be used in some embodiments to determine $a$ values representative of the backward channel, as discussed above. In some embodiments, the proposed processing may take into account two parameters that influence the value of $a$ : a time parameter, corresponding to the time at which the bit or symbol generating the backward reflection interference was transmitted, and the wavelength value at which such bit or symbol was transmitted at this time. Therefore in some embodiments the proposed processing may use $a$ values that depend on time as well as on wavelength values at this time:

One or more backward channel look-up tables (LUT), for example generated according to the proposed backward channel knowledge acquisition procedure, may be used in some embodiments to obtain a vector illustrated on Fig. 9 holding $a$ values as depending on both time and wavelength at such time: $\{a(t - k.T_{Tx}; wptx(t - k.T_{Tx})\}_{k=0,...,Bch\_size}$.

For example, in some embodiment, a first LUT may be used to retrieve a value of a at a time $t - k.T_{Tx}$, and a second LUT may be used to retrieve the wavelength point value $wptx(t - k.T_{Tx})$ at the time $t - k.T_{Tx}$. This advantageously allows to account for the fact that a backward reflection received for a signal transmitted by the transmitter of the transceiver at time $t - k.T_{Tx}$ will be received with a wavelength $wptx$ corresponding to the wavelength of the signal transmitted at time $t - k.T_{Tx}$.

Detuning values $\{e^{j\Phi(t-k.T_{Tx})}\}_{k=-Proc\_size,...,Bch\_size}$ respectively corresponding to time values $\{t - k.T_{Tx}\}_{k=-Proc\_size,...,Bch\_size}$ of the time vector may also be determined, for example using the proposed detuning measurement procedure. As discussed above, the detuning measurement procedure may be performed regularly, or only from time to time, so as to decrease the computations involved by the proposed compensation method. In particular, the above-described filtering procedure through which an estimate of the detuning, that is, the time-varying wavelength difference $\Phi(t)$ may be performed along each signal transmission of the transmitter of the transceiver, or according to a time interval which may in some embodiments be chosen as a function of a time constant driving wavelength variations, as discussed above (e.g. with respect to temperature changes).

An estimate of the interference component generated by the signal transmitted by the transmitter of the transceiver through backward reflections on its signal path of this transmitted signal may be obtained in some embodiments by a convolution of the transmitted signal and an estimated impulse response of the backward channel, which is determined using the estimated a parameter and the measured detuning. This convolution operation may be expressed in some embodiments as a sum at time values $\{t - k.T_{Tx}\}_{k=1,...,Bch\_size}$ of products of $a$ values and transmlitted signal $\tilde{t}$ values and detuning values: at a first order the backward channel interference component may be estimated as:

$$\sum_{k=1}^{Bch\_size} a(t - k.T_{Tx}; wptx(t - k.T_{Tx}).\tilde{t}(t - k.T_{Tx}).\cos(\Phi(t - k.T_{Tx}))$$

In some embodiments, the convolution operation may involve less than Bch_size components, as it may be chosen to streamline the computation to ignore some components. For example, in cases where no backward reflection beyond a predetermined threshold are received (in particular if no backward reflection can be detected at the receiver) the corresponding terms of the convolution operation, that would otherwise be used, may in some embodiments be ignored.

In the above estimation at a first order the backward channel interference component, the computation of the term $\cos(\Phi(t - k.T_{Tx})$ may be deemed computationally too intensive, so that the term $\cos(\Phi(t - k.T_{Tx})$ may be replaced in some embodiments with a predetermined value (e.g. equal to 1). In such case, as discussed above, only the amplitude distortion generated by the backward reflections interference is compensated for.

Wavelength point values at the transmitter (*Rxs*) that transmitted a source signal received at the transceiver of interest for time values of a time window of length $T_{Tx}(Proc\_size + Bch\_size)$ (illustrated on Fig. 8 by the vector ($wpRxs(t + Proc\_sizeT_{Tx} - 1)$ ; ...; $wpRxs(t + T_{Tx})$ ; $wpRxs(t)$ ; $wpRxs(t - T_{Tx})$;...; $wpRxs(t - k.T_{Tx})$;...; $wpRxs(t - Bch\_sizeT_{Tx})$)) may then be obtained, based on the wavelength point values $\{a(wptx(t - k.T_{Tx})\}_{k=-Proc\_size,...,Bch\_size}$ of the signal transmitted by the transmitter of the transceiver of interest which are available for the time window of length $T_{Tx}(Proc\_size + Bch\_size)$, and on the corresponding detuning measurement values $\{e^{j\Phi(t-k.T_{Tx})}\}_{k=-Proc\_size,...,Bch\_size}$ derived therefrom.

Referring back to the forward channel complex impulse response function $H_p = \alpha e^{j\theta}$, and to the frequency-domain representation of the first received signal described above by Equation 1, $\alpha$ values for time values of the time window of length $T_{Tx}(Proc\_size + Bch\_size)$ may be obtained based on the available wavelength point values at the transmitter (*Rxs*) (that transmitted a source signal received at the transceiver of interest) for corresponding time values, as illustrated on Fig. 8 by the vector ($\alpha(t + Proc\_sizeT_{Tx} - 1)$ ; ...; $\alpha(t + T_{Tx})$ ; $\alpha(t)$ ; $\alpha(t - T_{Tx})$ ;...; $\alpha(t - k.T_{Tx})$ ;... $\alpha(t - Bch\_sizeT_{Tx})$)

In other embodiments, the dependency of the $\alpha$ values (for time values of the time window of length $T_{Tx}(Proc\_size + Bch\_size)$) on the wavelength point values at the transmitter (*Rxs*) (that transmitted a source signal received at the transceiver of interest) for corresponding time values may be ignored, it which cases the variation of the $\alpha$ values based on the wavelength of the transmitted source signal may not be accounted for.

In some embodiments, a determination of a vector of $\alpha$ values may comprise the subtracting the backward channel interference component from the signal received at the receiver of the transceiver. In embodiments, the above estimate of the backward channel interference component may be used for the determination of a vector of vector of $\alpha$ values.

Fig. 9 illustrates an exemplary optical transceiver 80 configured to use an interference mitigation feature in accordance with embodiments of the present subject disclosure.

The transceiver 80 includes a control engine 81, an optical receiver 82, an optical transmitter 83, an optical interface 84, a memory 85, a data acquisition engine 86, a data processing engine 87, a data communication engine 88, and a clock engine (not represented on the figure).

In the architecture illustrated on Fig. 6, all of the receiver 82, transmitter 83, optical interface 84, memory 85, data acquisition engine 86, data processing engine 87, and data communication interface 88 are operatively coupled with one another through the control engine 81.

In one embodiment, the data acquisition engine 86 may be configured to perform various aspects of embodiments of the proposed method for receiving data, such as configuring parameters, acquiring data, and possibly performing a thresholding analysis as described above with respect to the proposed backward channel knowledge acquisition, and configuring parameters for a detuning measurement, acquiring data, and possibly performing a filtering analysis as described above with respect to the proposed detuning measurement procedure. Likewise, the data processing engine 87 is configured to perform various aspects of embodiments of the proposed method for receiving data, such as performing a thresholding analysis as described above with respect to the proposed backward channel knowledge acquisition, and performing a filtering analysis as described above with respect to the proposed detuning measurement procedure.

In one embodiment, the data processing engine 87 may be further configured to perform a backward channel interference compensation procedure as described above, for example based on the results of the proposed backward channel knowledge acquisition and detuning measurement procedures. In other embodiments, a backward channel interference compensation procedure as described above may be performed at a server node, e.g. an operation and management node as illustrated in Figs. 5, 6, and 7.

In one or more embodiments, the optical receiver 82 is configured to received optical signals, and the optical transmitter 83 is configured to transmit optical signals. The interface 84 may be adapted for connecting an optical fiber to the transceiver, and may be optically coupled to the receiver 82 and the transmitter 83.

In some embodiments, the data communication engine 88 is configured to receive and/or transmit signaling messages, such as, for example, receive the silent request message and/or the detuning measurement request message as described above from a network management node according any suitable signaling protocol. Likewise, the data communication engine 88 is configured to transmit signaling messages, such as the silent request positive or negative acknowledge message, the OTDR information messages, the detuning measurement request positive or negative acknowledge message, and the detuning measurement information message described above, to a network management node according any suitable signaling protocol. The data communication engine 88 may further be communicatively coupled to a network management node through one or more data communication networks.

The control engine 81 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. The control engine 81 may also comprise, or may be in communication with, computer storage media, such as, without limitation, the memory 85, capable of storing computer program instructions or software code that, when executed by the processor, cause the processor to perform the elements described herein. In addition, the memory 85 may be any type of data storage computer storage medium, capable of storing a data acquired by the receiver 82, for example during an OTDR backward channel knowledge acquisition or a detuning measurement data acquisition.

It will be appreciated that the transceiver 80 shown and described with reference to Fig. 9 is provided by way of example only. Numerous other architectures, operating environments, and configurations are possible. Other embodiments of the transceiver may include a fewer or greater number of components, and may incorporate some or all of the functionality described with respect to the transceiver components shown in Fig. 6. Accordingly, although the control engine 81, receiver 82, transmitter 83, optical interface 84, memory 85, data acquisition engine 86, data processing engine 87, and data communication engine 88 are illustrated as part of the transceiver 80, no restrictions are placed on the location and control of components 81 - 88. In particular, in other embodiments, components 81 - 88 may be part of different entities, devices, or systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for receiving data in an optical transceiver of an optical distribution network, the method comprising:

   receiving, at a receiving side of the optical transceiver, a received optical signal, wherein the received optical signal corresponds to a first transmit optical signal carrying the data transmitted by an optical source on a first transmission link that includes an optical fiber;

   determining an interference component of an interference signal in the received optical signal, wherein the interference component is induced by a transmission by a transmitting side of the optical transceiver of a second transmit optical signal on a second transmission link that includes the optical fiber ; and

   processing the received optical signal, based on the determined interference component, to obtain an estimate of the first transmit optical signal.

2. The method of claim 1, wherein the received optical signal and the second transmit optical signal respectively correspond to a downstream channel and an upstream channel of a bidirectional optical signal in a plurality of bidirectional optical signals transmitted on the optical fiber using frequency multiplexing.

3. The method of any of the preceding claims, wherein the determining the interference component comprises characterizing a combination of contribution signals induced from respective backward propagations of the transmitted second transmit optical signal.

4. The method of any of the preceding claims, further comprising: determining an amplitude distortion component of the interference component, and removing the amplitude distortion component from the received optical signal.

5. The method of any of the preceding claims, further comprising: determining a phase distortion component of the interference component, and removing the phase distortion component from the received optical signal.

6. The method of claim 3, wherein at least one contribution signal is generated by a backward reflection of the transmitted second transmit optical signal on a network node comprised in the second transmission link, such as a an optical connector or a power splitter of the optical distribution network.

7. The method of any of the preceding claims, wherein the determining the interference component comprises:

   - stopping all transmissions of light sources of the optical distribution network except for the transmitting side of the optical transceiver;
   - once none of the light sources other than the optical transceiver are transmitting, transmitting, at the transmitting side of the optical transceiver, of a predetermined signal;
   - recording, at the receiving side of the optical transceiver, of a received signal corresponding to the transmission of the predetermined signal.

8. The method of any of the preceding claims, wherein the determining the interference component comprises: determining an estimate of a first attenuation coefficient of a first signal component of the received optical signal that corresponds to the transmitted first transmit optical signal.

9. The method of any of the preceding claims, wherein the processing the received optical signal comprises: determining an estimate of a second attenuation coefficient of a second signal component of the received optical signal that corresponds to the transmitted second transmit optical signal.

10. The method of any of the preceding claims, wherein the determining the interference component comprises: determining an estimate of a phase shift coefficient, based on a first carrier frequency of the first transmit optical signal and a second carrier frequency of the second transmit optical signal.

11. An apparatus, the apparatus comprising a processor, a memory operatively coupled to the processor, and network interfaces to communicate in an optical distribution network, wherein the apparatus is configured to perform a method according to any of claims 1 to 10.

12. An optical transceiver of an optical distribution network comprising the apparatus of claim 11.

13. A non-transitory computer-readable medium encoded with executable instructions which, when executed, causes an apparatus comprising a processor operatively coupled with a memory, to perform a method according to any of claims 1 to 10.

14. A computer program product comprising computer program code tangibly embodied in a computer readable medium, said computer program code comprising instructions to, when provided to a computer system and executed, cause said computer to perform a method according to any of claims 1 to 10.

15. A data set representing, for example through compression or encoding, a computer program according to claim 14.

FIG. 1a

FIG. 1b

<50GHz

100GHz

1 Downstream Channel

2 Upstream Channel

FIG. 2

Tx data

53

50

55

51

Rx data

54

52

FIG. 3

Receive an optical signal — 60

Determine interference component of interference signal in received optical signal — 61

Process received optical signal based on determined interference component — 62

Obtain estimate of transmitted optical signal — 63

FIG. 4

FIG. 5

FIG. 6

EP 3 664 319 A1

FIG. 7

EP 3 664 319 A1

**Input look-up tables**

Anticipated
Bit to be transitted

Known from
backward
channel
estimation

Known from
Detuning
mesureament

Anticipated
Wavelength points

| $t + Proc\_size T_{Tx}-1$ | $nan$ | $nan$ | $nan$ | $e^{j\Phi(t+Proc\_size Tx)}$ | $wpRxs(t+Proc\_size T_{Tx}-1)$ | $\alpha(t+Proc\_size T_{Tx}-1)$ |
|---|---|---|---|---|---|---|
| $\vdots$ | $\vdots$ | $\vdots$ | $\vdots$ | $\vdots$ | $\vdots$ | $\vdots$ |
| $t + T_{Tx}$ | $\bar{t}(t+T_{Tx})$ | $nan$ | $nan$ | $e^{j\Phi(t+Tx)}$ | $wpRxs(t+T_{Tx})$ | $\alpha(t+T_{Tx})$ |
| $t$ | $\bar{t}(t)$ | $wptx(t)$ | $a(t; wptx(t))$ | $e^{j\Phi(tTx)}$ | $wpRxs(t)$ | $\alpha(t)$ |
| $t - T_{Tx}$ | $\bar{t}(t-T_{Tx})$ | $wptx(t-T_{Tx})$ | $a(t-T_{Tx}; wptx(t-Tx))$ | $e^{j\Phi(t-Tx)}$ | $wpRxs(t-T_{Tx})$ | $\alpha(t-T_{Tx})$ |
| $\vdots$ | $\vdots$ | $\vdots$ | $\vdots$ | $\vdots$ | $\vdots$ | $\vdots$ |
| $t - kT_{Tx}$ | $\bar{t}(t-kT_{Tx})$ | $wptx(t-kT_{Tx})$ | $a(t-kT_{Tx}; wptx(t-kTx))$ | $e^{j\Phi(t-kTx)}$ | $wpRxs(t-kT_{Tx})$ | $\alpha(t-kT_{Tx})$ |
| $\vdots$ | $\vdots$ | $\vdots$ | $\vdots$ | $\vdots$ | $\vdots$ | $\vdots$ |
| $t - Bch\_size T_{Tx}$ | | | | | | |

**Ouput**

First order of the Backward channel Interference:
$\sum_{1}^{Bch\_size} a(t-kT_{Tx}; wptx(t-kT_{Tx}))^* \bar{t}(t-kT_{Tx}) \times \cos(\Phi(t-kT_{Tx}))$

Interference to be subtracted to the received signal

## FIG. 8

FIG. 9

Europäisches Patentamt

European Patent Office

Office européen des brevets

# EUROPEAN SEARCH REPORT

Application Number

EP 18 30 6650

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 441 937 B1 (BAUR ELMAR [DE] ET AL) 27 August 2002 (2002-08-27) * column 3, line 5 - line 30; figure 2 * * column 6, line 15 - column 7, line 8 * * abstract * ----- | 1-15 | INV. H04B10/40 |
| X | US 6 999 679 B2 (FINISAR CORP [US]) 14 February 2006 (2006-02-14) * column 1, line 56 - line 64; figures 1,4 * * column 3, line 9 - line 11 * * column 4, line 25 - line 48 * * column 5, line 24 - line 34 * * column 6, line 1 - line 27 * ----- | 1-4,6, 11-15 | |
| A | WO 2013/098325 A1 (NOKIA SIEMENS NETWORKS OY [FI]) 4 July 2013 (2013-07-04) * page 6, line 20 - page 7, line 15; figure 4 * * page 7, line 20 - page 8, line 25; figure 5 * ----- | 1-15 | |

TECHNICAL FIELDS SEARCHED (IPC)

H04B

The present search report has been drawn up for all claims

| Place of search | Date of completion of the search | Examiner |
|---|---|---|
| Munich | 6 June 2019 | Borsier, Celine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 6650

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2019

| Patent document cited in search report | | | Publication date | Patent family member(s) | | | Publication date |
|---|---|---|---|---|---|---|---|
| US 6441937 | | B1 | 27-08-2002 | DE | 10196648 | D2 | 27-05-2004 |
| | | | | DE | 50106232 | D1 | 16-06-2005 |
| | | | | EP | 1402660 | A1 | 31-03-2004 |
| | | | | US | 6441937 | B1 | 27-08-2002 |
| | | | | WO | 03005613 | A1 | 16-01-2003 |
| US 6999679 | | B2 | 14-02-2006 | EP | 1676381 | A2 | 05-07-2006 |
| | | | | KR | 20060085637 | A | 27-07-2006 |
| | | | | US | 2005078963 | A1 | 14-04-2005 |
| | | | | WO | 2005038996 | A2 | 28-04-2005 |
| WO 2013098325 | | A1 | 04-07-2013 | CN | 103988450 | A | 13-08-2014 |
| | | | | EP | 2798757 | A1 | 05-11-2014 |
| | | | | US | 2014376911 | A1 | 25-12-2014 |
| | | | | US | 2016080032 | A1 | 17-03-2016 |
| | | | | WO | 2013098325 | A1 | 04-07-2013 |

EPO FORM P0459

For more details about this annex : see Official Journal of the European Patent Office, No. 12/82